# EUROPEAN PATENT SPECIFICATION

(11) **EP 3 379 612 B1**
(45) Date of publication and mention of the grant of the patent: **09.12.2020**
(21) Application number: 17188756.5
(22) Date of filing: 31.08.2017
(51) Int. Cl.: H01M 4/131, H01M 4/36, H01M 4/485, H01M 4/62, H01M 10/0525, H01M 2/10, H01M 4/04, H01M 4/02

(54) **ACTIVE MATERIAL, ELECTRODE, SECONDARY BATTERY, BATTERY MODULE, BATTERY PACK, AND VEHICLE**
AKTIVMATERIAL, ELEKTRODE, SEKUNDÄRBATTERIE, BATTERIEMODUL, BATTERIEPACK UND FAHRZEUG
MATÉRIAU ACTIF, ÉLECTRODE, BATTERIE SECONDAIRE, MODULE DE BATTERIE, BLOC-BATTERIE ET VÉHICULE

(30) Priority: 21.03.2017 JP 2017054612
(43) Date of publication of application: 26.09.2018
(73) Proprietor: KABUSHIKI KAISHA TOSHIBA, Minato-ku Tokyo 105-8001 (JP)
(72) Inventor: Harada, Yasuhiro, Tokyo, 105-8001 (JP); Ise, Kazuki, Tokyo, 105-8001 (JP); Takami, Norio, Tokyo, 105-8001 (JP)
(74) Representative: Hoffmann Eitle

(56) References cited:
- US-A1- 2016 276 650
- US-A1- 2017 069 910
- US-A1- 2017 077 508
- B PRIHANDOKO ET AL: "Variation of Carbon Coating on Li 2 Na 2 Ti 6 O 14 as Anode Material of Lithium Battery", I O P CONFERENCE SERIES: MATERIALS SCIENCE AND ENGINEERING, vol. 202, 31 May 2017 (2017-05-31), page 012053, XP055421968, GB ISSN: 1757-8981, DOI: 10.1088/1757-899X/202/1/012053
- BIN-NA YUN ET AL: "Improved electrochemical performance of boron-doped carbon-coated lithium titanate as an anode material for sodium-ion batteries", JOURNAL OF MATERIALS CHEMISTRY A: MATERIALS FOR ENERGY AND SUSTAINABILITY, vol. 5, no. 6, 22 December 2016 (2016-12-22), pages 2802-2810, XP055422110, GB ISSN: 2050-7488, DOI: 10.1039/C6TA10494K

## Description

### FIELD

The present disclosure relate to an active material, an electrode, a secondary battery, a battery module, a battery pack, and a vehicle.

### BACKGROUND

Recently, a nonaqueous electrolyte secondary battery such as a lithium ion secondary battery has been actively researched and developed as a high energy-density battery. The nonaqueous electrolyte secondary battery is anticipated as a power source for vehicles such as hybrid automobiles, electric cars, an uninterruptible power supply for base stations for portable telephones, or the like. Therefore, the nonaqueous electrolyte secondary battery is demanded to, in addition to having a high energy density, be excellent in other performances such as rapid charge-discharge performances and long-term reliability, as well. For example, not only is the charging time remarkably shortened in a nonaqueous electrolyte battery capable of rapid charge and discharge, but the battery is also capable of improving motive performances in vehicles such as hybrid automobiles, and efficient recovery of regenerative energy of motive force.

In order to enable rapid charge-and-discharge, electrons and lithium ions must be able to migrate rapidly between the positive electrode and the negative electrode. However, when a battery using a carbon-based negative electrode is repeatedly subjected to rapid charge-and-discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge-and-discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium as the negative electrode active material has a problem that the energy density is low. In particular, when a material having a high potential relative to metallic lithium is used as a negative electrode material, the voltage becomes lower than that of a conventional battery using a carbonaceous material. Therefore, when such a material is used for systems requiring a high voltage such as an electric vehicle and a large-scale electric power storage system, there is a problem that the number of batteries connected in series becomes large.

The potential of the electrode using an oxide of titanium is about 1.5 V (vs. Li/Li⁺) relative to metallic lithium. The potential of an oxide of titanium arises from the redox reaction between Ti³⁺ and Ti⁴⁺ upon electrochemical insertion and extraction of lithium, and is therefore electrochemically restricted. It has therefore been conventionally difficult to drop the potential of the electrode in order to improve the energy density.

US 2017/0077508 relates to an electrode including an orthorhombic Na-containing niobium titanium composite oxide as a first composite oxide and a second composite oxide represented by a general formula of Li₂₊ₐNa_{2+b}Ti₆O₁₄, wherein -0.2≤a≤2 and -0.2≤b≤0.2.

US2016276650A1 concerns an active material including particles of a composite oxide of the general formula Ti_{1±x}Nb_{2±y}M₂O_{7-δ} and a carbon-including phase. Here, 0≦x≦0.15, 0≦y≦0.3, 0.01<z≦0.2, and 0<δ<0.3. M is at least one of Mg, Fe, Ni, Co, W, Ta, and Mo.

US2017069910A1 concerns an active material including a composite oxide with a monoclinic crystal structure. The composite oxide is represented by a general formula of Li_{w}Na₄₋ₓM1_{y}Ti_{6-z}M2₂O_{14+δ}. In the general formula, the M1 is at least one element selected from the group consisting of Rb, Cs, K and H; the M2 is at least one metallic element selected from the group consisting of Zr, Sn, V, Nb, Ta, Mo, W, Fe, Co, Mn and Al; w is within a range of 0≤w<12; x is within a range of 0<x<4; y is within a range of 0≤y<2; z is within a range of 0<z<6; and 6 is within a range of -0.3≤δ≤0.3.

### BRIEF DESCRIPTION OF THE DRAWINGS

FIG. 1 shows charge-and-discharge curves of carbon coated Li₂Na_{1.5}Ti_{5.5}Nb_{0.5}O₁₄;
FIG. 2 is a cross-sectional view schematically showing an example of a secondary battery according to a second approach;
FIG. 3 is an enlarged cross-sectional view of section A of the secondary battery shown in FIG. 2;
FIG. 4 is a partially cut-out perspective view schematically showing another example of the secondary battery according to the second approach;
FIG. 5 is an enlarged cross-sectional view of section B of the secondary battery shown in FIG. 4;
FIG. 6 is a perspective view schematically showing an example of a battery module according to a third approach;
FIG. 7 is an exploded perspective view schematically showing an example of a battery pack according to a fourth approach;
FIG. 8 is a block diagram showing an example of an electric circuit of the battery pack shown in FIG. 7;
FIG. 9 is a cross-sectional view schematically showing an example of a vehicle according to a fifth approach; and
FIG. 10 is a diagram schematically showing another example of the vehicle according to the fifth approach.

### DETAILED DESCRIPTION

According to one approach, an active material is provided, comprising: a titanium-containing composite oxide phase comprising a crystal structure belonging to a space group Cmca, a space group Fmmm, or both the space group Cmca and the space group Fmmm, the titanium-containing composite oxide phase comprising a titanium-containing composite oxide represented by a general formula

Li₂₊ₐM1_{2-b}Ti_{6-c}M2_{d}O_{14+δ},

where M1 is at least one selected from the group consisting of Sr, Ba, Ca, Mg, Na, Cs, Rb, and K,
M2 is at least one selected from the group consisting of Zr, Sn, V, Nb, Ta, Mo, W, Y, Fe, Co, Cr, Mn, Ni, and Al, and
a falls within a range of 0 ≤ a ≤ 6, b falls within a range of 0 ≤ b < 2, c falls within a range of 0 ≤ c < 6, d falls within a range of 0 ≤ d < 6, and δ falls within a range of -0.5 ≤ δ ≤ 0.5; and
a carboxyl group-containing carbon coating layer covering at least a part of the titanium-containing composite oxide phase and having a carboxyl group concentration of 0.01% to 5%, measured in accordance with the section "*Method of Measuring Carboxyl Group in Carbon Coating Layer*" of this specification, according to independent claim 1.

According to another approach, an electrode including the active material of the above approach is provided.

According to still another approach, a secondary battery including a positive electrode, a negative electrode, and an electrolyte is provided. The negative electrode is the electrode according to the above approach.

According to yet another approach, a battery module including plural secondary batteries is provided. The secondary batteries include the secondary battery according to the above approach. The secondary batteries are electrically connected in series, in parallel, or in a combination of in series and in parallel.

According to still another approach, a battery pack including secondary batteries is provided. The secondary batteries of the battery pack include the secondary battery according to the above approach.

According to yet another approach, a vehicle including the battery pack according to the above approach is provided.

According to the approach, there is provided an active material that can realize a secondary battery that can exhibit a high energy density, and is excellent in output performance and life performance at high temperature, an electrode including this active material, a secondary battery including this electrode, a battery module including this secondary battery, a battery pack including this secondary battery, and a vehicle including this battery pack.

Approaches will be explained below with reference to the drawings. Structures common among the approaches are represented by the same symbols and over-lapping explanations are omitted. Also, each drawing is a typical view for explaining the approaches and for promoting an understanding of the approaches. Though there are parts different from an actual device in shape, dimension and ratio, these structural designs may be appropriately changed taking the following explanations and known technologies into consideration. In addition, similar effects can be achieved, even if the compositional elements include inevitable impurities accompanying industrial materials or industrial processes.

### (First Approach)

According to a first approach, an active material including a titanium-containing composite oxide phase and a carboxyl group-containing carbon coating layer is provided. The carboxyl group-containing carbon coating layer covers at least a part of the surface of the titanium-containing composite oxide phase.

In one aspect, the titanium-containing composite oxide phase included in the active material includes a crystal structure belonging to a space group Cmca, a crystal structure belonging to a space group Fmmm, or a crystal structure in which the crystal structure belonging to the space group Cmca and the crystal structure belonging to the space group Fmmm coexist.

The titanium-containing composite oxide phase included in the active material includes a titanium-containing composite oxide represented by the general formula Li₂₊ₐM1_{2-b}Ti_{6-c}M2_{d}O_{14+δ}, where M1 is at least one selected from the group consisting of Sr, Ba, Ca, Mg, Na, Cs, Rb, and K, and M2 is at least one selected from the group consisting of Zr, Sn, V, Nb, Ta, Mo, W, Y, Fe, Co, Cr, Mn, Ni, and Al. In addition, subscript a falls within the range of 0 ≤ a ≤ 6, subscript b falls within the range of 0 ≤ b < 2, subscript c falls within the range of 0 ≤ c < 6, subscript d falls within the range of 0 ≤ d < 6, and subscript δ falls within the range of -0.5 ≤ δ ≤ 0.5.

In either of the aspects, the active material may be a battery active material. If the active material is a battery active material, the active material may be contained in an electrode. In the electrode, the active material may be contained in an active material-containing layer. The active material-containing layer may further contain an electro-conductive agent and a binder. The electrode containing the active material may be included as, for example, a negative electrode in a secondary battery. The secondary battery may be a lithium secondary battery. If the active material is contained in the lithium secondary battery, lithium may be inserted into and extracted from the active material.

When lithium titanate is used as a battery active material, it has been difficult to improve the energy density. Considering this, titanium-containing composite oxide having a crystal structure belonging to the space group Cmca or Fmmm was found as an active material capable of realizing a nonaqueous electrolyte secondary battery for which the insertion/extraction reaction of lithium progress at a potential lower than lithium titanate, while having excellent low-temperature input performance and life performance equivalent to a case of using lithium titanate. In a titanium-containing composite oxide having such a crystal structure, the insertion/extraction reaction of lithium progresses at a potential of from, about 1.2 V to 1.5 V (vs. Li/Li⁺). For this reason, a nonaqueous electrolyte secondary battery using a negative electrode containing such a titanium-containing composite oxide exhibits a battery voltage higher than that of a nonaqueous electrolyte secondary battery containing lithium titanate.

On the other hand, the titanium-containing composite oxide contains an alkali metal element and/or an alkaline earth metal element, and because of this, exhibits a high basicity. For this reason, if the titanium-containing composite oxide is used as a battery active material, degradation of the binder in the electrode and side reactions with the nonaqueous electrolyte readily occur. In particular, the battery life is remarkably short at temperatures higher than 45°C.

The above described titanium-containing composite oxide, which may be included in the titanium-containing composite oxide phase in the active material according to the first approach, has an average potential of Li insertion in the potential range of from 0.5 V to 1.45 V (vs. Li/Li⁺) with reference to the redox potential of Li. As a result of this, a secondary battery using the active material according to the first approach as the negative electrode active material can exhibit a higher battery voltage than a secondary battery that uses in the negative electrode, a titanium composite oxide having a Li insertion potential of 1.55 V (vs. Li/Li⁺), for example.

In addition, much Li ions can be inserted into the above described titanium-containing composite oxide within a potential range of from 1.0 V to 1.45 V (vs. Li/Li⁺).

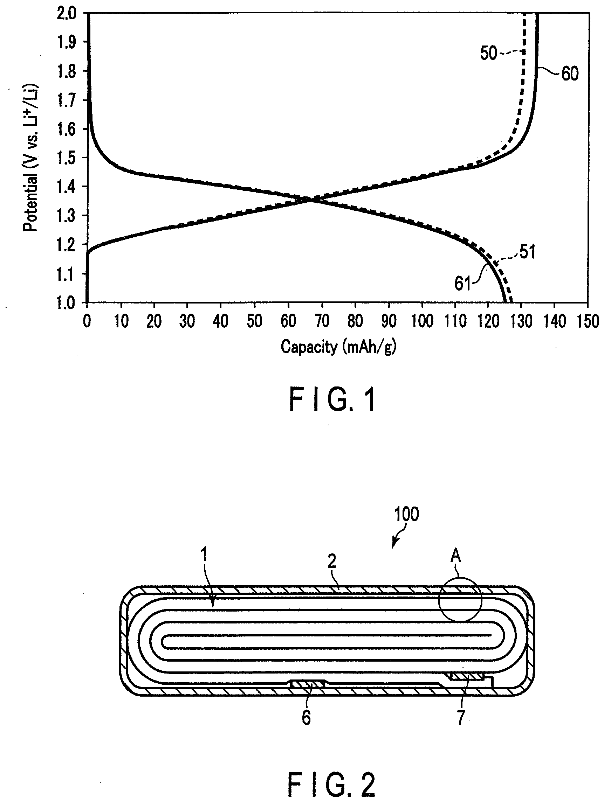

Because the active material according to the first approach includes a phase of this titanium-containing composite oxide, the active material is able to have much Li ions be stably inserted within the potential range of 1.0 V to 1.45 V (vs. Li/Li⁺), which is the redox potential of titanium. On top of that, because side reactions with an electrolyte can be suppressed, even under temperature conditions higher than 45°C, life performance is excellent. With reference to FIG. 1, the reason is explained below.

FIG. 1 is a graph showing the initial charge and discharge curves (a discharge curve 50 and a charge curve 51), at 60°C, of a carbon-coated composite oxide formed by coating the surface of a composite oxide Li₂Na_{1.5}Ti_{5.5}Nb_{0.5}O₁₄ with conventional carbon, that is, a carbon coating layer that does not contain a carboxyl group. FIG. 1 also shows the charge and discharge curves (a discharge curve 60 and a charge curve 61), at 60°C, of a carbon-coated composite oxide formed by coating the surface of the composite oxide Li₂Na_{1.5}Ti_{5.5}Nb_{0.5}O₁₄ with carbon containing a carboxyl group, that is, a carboxyl group-containing carbon coating layer. Note that the composite oxide Li₂Na_{1.5}Ti_{5.5}Nb_{0.5}O₁₄ is an example of a composite oxide that the active material according to the first approach can include as a titanium-containing composite oxide phase.

As can be seen from comparison of the discharge curves (the discharge curves 50 and 60) of the charge and discharge curves shown in FIG. 1, the discharge capacity represented by the discharge curve 60 is larger than the discharge capacity represented by the discharge curve 50. On the other hand, the charge capacity represented by the charge curve 51 and the charge capacity represented by the charge curve 61 are nearly equal. Hence, it can be seen that the initial charge-and-discharge efficiency becomes higher by coating the composite oxide with carbon containing a carboxyl group. Presumably, side reactions are suppressed by the carboxyl group-containing carbon coating layer. When such a carbon-coated composite oxide is used in the negative electrode, it is possible to provide a secondary battery that exhibits a high voltage and high energy density and is excellent in output performance and life performance at a temperature higher than 45°C.

The carbon-coated composite oxide contained in the active material according to one aspect of the first approach contains the titanium-containing composite oxide represented by the general formula Li₂₊ₐM1_{2-b}Ti_{6-c}M2_{d}O_{14+δ} and thus contains atoms of an alkali metal element and/or an alkaline earth metal element, while the average operating potential (vs. Li/Li⁺) with respect to the redox potential of Li is low, within the potential range of from 1.0 V to 1.45 V (vs. Li/Li⁺). Nevertheless, the active material of this aspect has excellent life performance at a high temperature. The reason will be explained below.

The titanium-containing composite oxide phase included in the active material according to the first approach includes the titanium-containing composite oxide represented by the general formula Li₂₊ₐM1_{2-b}Ti_{6-c}M2_{d}O_{14+δ}, where M1 is at least one selected from the group consisting of Sr, Ba, Ca, Mg, Na, Cs, Rb, and K, and M2 is at least one selected from the group consisting of Zr, Sn, V, Nb, Ta, Mo, W, Y, Fe, Co, Cr, Mn, Ni, and Al. In addition, subscript a falls within the range of 0 ≤ a ≤ 6, subscript b falls within the range of 0 ≤ b < 2, subscript c falls within the range of 0 ≤ c < 6, subscript d falls within the range of 0 ≤ d < 6, and subscript δ falls within the range of -0.5 ≤ δ ≤ 0.5. In the active material according to the approach, the carboxyl group-containing carbon coating layer covers at least a part of the surface of the titanium-containing composite oxide phase.

When this composite oxide is used as an electrode active material in a secondary battery, Li is inserted into the composite oxide, and the electrode potential lowers. Hence, the composite oxide becomes more apt to undergo side reactions with the electrolyte in the battery.

Additionally, since the titanium-containing composite oxide contains an alkali metal element and/or an alkaline earth metal element in addition to Li, the basicity on the surface of the phase of the composite oxide is high. More specifically, the pH of the titanium-containing composite oxide can range from, for example, 10.5 to 12. Note that the pH here means a value measured by a method described later.

As a result, if the titanium-containing composite oxide is used in a secondary battery, the decomposition reaction of the electrolyte is promoted, particularly under a high-temperature condition at 45°C or more.

In the active material according to the first approach, the surface of the titanium-containing composite oxide phase is covered with the carboxyl group-containing carbon coating layer. The bases on the composite oxide surface is neutralized by the carboxyl group, and the reactivity to the electrolyte can be suppressed. More specifically, the pH of the titanium-containing composite oxide covered with the carboxyl group-containing carbon coating layer may be less than 11. The pH after covering is preferably greater than or equal to 7 and less than 11.

Moreover, since the titanium-containing composite oxide phase is covered with the carboxyl group-containing carbon coating layer, the composite oxide surface and the electrolyte hardly come into direct contact. As a result, the life performance of the secondary battery at a high temperature of 45°C or more can be largely improved. The above-described effect can be obtained when the carboxyl group-containing carbon coating layer is present on at least a part of the surface of the titanium-containing composite oxide phase.

Due to the above-described reasons, the active material according to the first approach can provide a secondary battery capable of suppressing side reactions and exhibiting excellent life performance, although the active material contains the titanium-containing composite oxide whose average operating potential (vs. Li/Li⁺) with respect to the redox potential of Li is reduced, within the potential range of from 1.0 V to 1.45 V (vs. Li/Li⁺).

The titanium-containing composite oxide phase in the active material according to the first approach may include a composite oxide having a crystal structure in which a crystal phase belonging to a symmetry of the space group Cmca and space group Fmmm is mixed, or include a composite oxide having a crystal structure similar to the Cmca or Fmmm symmetry. Even in such cases, the same effects can be obtained as those obtained in the active material of the aspect including the composite oxide belonging to the symmetry of the space group Cmca or composite oxide belonging to the symmetry of the space group Fmmm. Specific examples of the symmetry similar to the Cmca and Fmmm symmetry include space groups Cmcm, Pmma, Cmma, and the like.

The titanium-containing composite oxide phase included in the active material according to the first approach may be in a particulate form, for example. The average particle size of the titanium-containing composite oxide included in the active material of the first approach is not particularly limited, and may be changed according to desired battery performance.

### <BET Specific Surface Area>

Considering the active material according to the first approach as being, for example, an active material particle in which the titanium-containing composite oxide phase has a particulate form, where the surface of such a titanium-containing composite oxide particle is covered with the carboxyl group-containing carbon coating layer, the BET specific surface area of the active material particle is preferably equal to or greater than 1 m²/g and less than 50 m²/g. The BET specific surface area of the active material particle is more preferably 2 m²/g to 5 m²/g.

When the BET specific surface area is 1 m²/g or more, the contact area between the active material particle and electrolyte can be secured. Thus, good discharge rate performances can be easily obtained and also, a charge time can be shortened. On the other hand, when the BET specific surface area is less than 50 m²/g, reactivity between the active material and electrolyte can be prevented from being too high and therefore, the life performance can be improved. When the BET specific surface area is 5 m²/g or less, side reactions with the electrolyte can be suppressed, and thereby longer life can be further expected. Furthermore, in this case, a coatability of a slurry including the active material used in the production of an electrode, which will be described later, can be improved.

Here, for the measurement of the specific surface area, a method is used where molecules, in which an occupied area in adsorption is known, are adsorbed onto the surface of powder particles at the temperature of liquid nitrogen, and the specific surface area of the sample is determined from the amount of adsorbed molecules. The most often used method is a BET method based on the low temperature/low humidity physical adsorption of an inert gas. This BET method is a method based on the BET theory, which is the most well-known theory of the method of calculating the specific surface area in which the Langmuir theory, which is a monolayer adsorption theory, is extended to multilayer adsorption. The specific surface area determined by the above method is referred to as "BET specific surface area".

As described above, the above-described effect can be obtained when the carboxyl group-containing carbon coating layer exists on at least a part of the surface of the titanium-containing composite oxide phase. For example, the carbon-coat weight ratio of the composite oxide phase is preferably 0.5 wt% or more. The carbon-coat weight ratio of the composite oxide phase can be obtained by a measurement result obtained by a method described later.

The thickness of the carbon coating layer is not particularly limited, and is preferably 0.5 nm to 30 nm. If the thickness is less than 0.5 nm, the coverage by the carbon coating layer is small, and the effect can hardly be obtained. On the other hand, if the thickness is more than 30 nm, the movement of Li ions is undesirably impeded.

The amount of the carboxyl group in the carbon coating layer is such an amount that the carboxyl group concentration on the carbon coating layer obtained by a later described method would be 0.01% to 5%.

If the carboxyl group concentration is lower than 0.01%, alkalinity due to the alkali metal element and/or the alkaline earth metal element on the surface of the titanium-containing composite oxide phase cannot be sufficiently neutralized. If the carboxyl group concentration is higher than 5%, the amount of the carboxyl group on the surface of the titanium-containing composite oxide phase is excessive, leading to elution of the alkali metal atoms and/or alkaline earth metal atoms from the inside of the composite oxide phase. Due to elution of the atoms, the crystal structure changes, undesirably lowering the battery life.

### <Production Method>

The active material according to the first approach may be produced, for example, by the method described below.

First, titanium-containing composite oxide included in the active material can be synthesized by a solid phase reaction as described below.

At the early most, raw materials, such as oxides and salts, are mixed in an appropriate stoichiometric ratio to obtain a mixture. The above salt is preferably a salt such as a carbonate or nitrate, which decomposes at a relatively low temperature to form an oxide. Next, the obtained mixture is ground and mixed as uniformly as possible. Subsequently, the resulting mixture is pre-calcined. The pre-calcination is performed at a temperature range of 600°C to 850°C in air for a total of 3 to 15 hours.

Then, the calcination temperature is increased and main-calcination is performed at a temperature range of from 900°C to 1500°C in air.

At this time, lithium, which is a light element, may become vaporized due to calcining at a temperature of 900ºC or higher. In such a case, a sample having a correct composition can be obtained, for example, by compensating for the amount of lithium that becomes vaporized, as follows. For example, the vaporized amount of lithium under the calcining conditions may be investigated, and a raw material including lithium may be provided in excess by that amount.

Alternatively, for example, a mixture having the same composition as the pre-calcined raw material mixture may be prepared, and the pre-calcined product may be covered with the mixture. The pre-calcined product is subjected to main-calcination while being covered with the raw material mixture, whereby the raw material mixture forms an outer shell, and vaporization of lithium from the pre-calcined product can be prevented. After the main-calcination, the outer shell is removed.

Furthermore, it is more preferable to prevent lattice defects caused by oxygen deficiency or the like. For example, the raw material powder may be pressure-molded into pellets or rods before main-calcination, whereby the area exposed to atmosphere is decreased, and the contact area between the particles is increased. Generation of lattice defects can be suppressed by calcining in this manner. In the case of industrial mass production, it is preferred that oxygen deficiency be repaired by calcining the raw material powder under high oxygen partial pressure such as under an oxygen atmosphere, or by heat treatment (annealing) in the temperature range of from 400ºC to 1000ºC after standard calcination in air.

On the other hand, oxygen deficiency may be intentionally left, thereby changing the oxidation number of titanium contained in the composite oxide to increase electron conductivity. However, if generation of lattice defects is not suppressed, the crystallinity decreases, and thus the battery performance may decrease when the composite oxide is used as a battery active material. In order to prevent this, it is more preferable to follow the annealing treatment with quenching, for example, by rapidly cooling to the temperature of liquid nitrogen.

The thus obtained titanium-containing composite oxide may be used as the titanium-containing composite oxide phase in the active material according to the approach.

Next, the surface of the composite oxide (titanium-containing composite oxide phase), which has been obtained by synthesizing as described above, is covered with a carboxyl group-containing carbon coating layer. For example, a polyvinyl acetate resin obtained by polymerizing polyvinyl alcohol vinyl acetate monomer is saponified, dissolved in water, and mixed with the composite oxide to obtain a mixture. This mixture is granulated and dried using a spray-dry method, for example, thereby obtaining granules.

As the polyvinyl alcohol (PVA), PVA with a saponification degree of from 70% to 98% is preferably used. If PVA with a saponification degree of less than 70% is used, the solubility in water increases. In this case, since there is delay in precipitation of PVA onto the composite oxide surface when drying the dispersion solvent, the composite oxide tends to aggregate.

On the other hand, in order for there to be carboxyl groups remaining in the carbon coating layer, the saponification degree is preferably low. However, if the saponification degree is too low, the solution viscosity is unstable. Since it is consequently difficult to form an even carbon coating layer on the composite oxide surface, an excessively low saponification degree is not preferable. From this viewpoint, the saponification degree is preferably high. However, PVA whose saponification degree is higher than 98% has remarkably low solubility in water. This undesirably makes the production difficult. More preferably, the saponification degree ranges from 70% to 85%.

The obtained granules are carbonized by performing heat treatment within the range of from 500°C to 750°C under a nitrogen atmosphere. At this time, in order to have the carboxyl groups remain, the temperature and time of the treatment are adjusted in accordance with the saponification degree of used polyvinyl acetate. If the heat treatment is applied by a conventional method, the carboxyl group is carbonized without remaining. An example of an appropriate heat treatment method will be described below.

First, a sample is heated to 500°C for 30 min in a nitrogen flow atmosphere using a tube furnace as preheating for dehydration, and then cooled down to room temperature. Next, the sample is transferred into a glass tube. The glass tube is evacuated, and nitrogen is then sealed therein. A carbonization heat treatment is performed at 400°C to 700°C in the closed nitrogen atmosphere. The heating is continued until a tar-like viscous liquid adheres to the glass tube (for about 1 hour).

By performing the heat treatment in this way, the carboxyl group can be left remaining at the time of carbonization. The preferable heating temperature changes depending on the saponification degree. Namely, the heat temperature is preferably changed, for example, as indicated in Table 1. An active material containing the composite oxide (titanium-containing composite oxide phase) covered with the carboxyl group-containing carbon layer is thus obtained. It is therefore possible to provide a battery having excellent life performance under a high temperature of 45°C or more.

**[Table 1]**

| Saponification degree | Carbonization condition Temperature, Time |
|---|---|
| 95 | 500°C, 1h |
| 80 | 550°C, 1h |
| 75 | 600°C, 1h |
| 70 | 700°C, 1h |

As described above, for example, if the heat treatment is applied based on a conventional carbonization method, the carboxyl group cannot be left remaining. Such a composite oxide covered with a carbon coating layer, in which the carboxyl group has been carbonized, can be immersed in a solution containing a compound having a carboxyl group, for example, and thereby, carboxyl groups can be added to the surface of the carbon coating layer. Similarly, also in a case in which the composite oxide is immersed in a solution containing a compound having a carboxyl group for pH adjustment, for example, the carboxyl group may become added to the surface of the carbon coating layer. However, if the carboxyl group is added in this way, a structure is obtained where much carboxyl group is distributed on the surface of the carbon coating layer. For this reason, presence of the carboxyl group is little at a portion of the carbon coating layer, which is in contact with the surface of the titanium-containing composite oxide phase where basicity is high. In this case, a sufficient neutralization effect can hardly be obtained.

On the other hand, if the carboxyl group is left remaining, for example, by calcination of the above-described method, the carbonized surface (the surface of the carbon coating layer) is sufficiently exposed to the heat source and carbonization has proceeded, while much carboxyl group remains at the interface between the carbon coating layer and the titanium-containing composite oxide phase. It is therefore possible to easily obtain the effect of neutralizing the alkali metal element or alkaline earth metal element on the surface of the titanium-containing composite oxide phase.

### <Method of Measuring Active Material>

Next, a method for obtaining the X-ray diffraction diagram of the active material according to the powder X-ray diffraction method, and a method for examining the composition of the titanium-containing composite oxide included in the active material will be described. A method of measuring the amount of carbon in the carbon coating layer included in the active material, the thickness of the carbon layer, and the amount of carboxyl group will also be explained.

When a target active material to be measured is included in an electrode material of a secondary battery, a pre-treatment is performed as described below.

First, a state close to the state in which Li ions are completely extracted from a crystal of the composite oxide phase in the active material is achieved. For example, when the target active material to be measured is included in a negative electrode, the battery is brought into a completely discharged state. For example, a battery can be discharged in a 25°C environment at 0.1 C current to a rated end voltage, whereby the discharged state of the battery can be achieved. Although a slight amount of residual lithium ions may exist even in the discharged state, this does not significantly affect results of powder X-ray diffraction measurement described below.

Next, the battery is disassembled in a glove box filled with argon, and the electrode is taken out. The taken-out electrode is washed with an appropriate solvent and dried under reduced pressure. For example, ethyl methyl carbonate may be used for washing. After washing and drying, whether or not there are white precipitates such as a lithium salt on the surface is examined.

The washed electrode is processed or treated into a measurement sample as appropriate, depending on the measurement method to be subjected to. For example, in the case of subjecting to the powder X-ray diffraction measurement, the washed electrode is cut into a size having the same area as that of a holder of the powder X-ray diffraction apparatus, and used as a measurement sample.

When necessary, the active material is extracted from the electrode to be used as a measurement sample. For example, in the case of subjecting to a composition analysis, or in the case of measuring the amount of carbon, the active material is taken out from the washed electrode, and the taken-out active material is analyzed, as described later.

### <Method for Obtaining X-Ray Diffraction Diagram of Composite Oxide according to Powder X-Ray Diffraction>

The crystal structure included in the active material can be examined by powder X-Ray Diffraction (XRD). By analyzing the measurement results of the powder X-Ray Diffraction, the crystal structure included in the titanium-containing composite oxide phase that is included in the active material according to the approach can be examined, for example.

The powder X-ray diffraction measurement of the active material is performed as follows:
First, the target sample is ground until an average particle size reaches about 5 µm. Even if the original average particle size is less than 5 µm, it is preferable that the sample is subjected to a grinding treatment with a mortar, or the like, in order to grind apart aggregates. The average particle size can be obtained by laser diffraction, for example.

The ground sample is filled in a holder part having a depth of 0.5 mm, formed on a glass sample plate. As the glass sample plate, for example, a glass sample plate manufactured by Rigaku Corporation is used. At this time, care should be taken to fill the holder part sufficiently with the sample. Precaution should be taken to avoid cracking and formation of voids caused by insufficient filling of the sample. Then, another glass plate is used to smoothen the surface of the sample by sufficiently pressing the glass plate against the sample. In this case, precaution should be taken to avoid too much or too little a filling amount, so as to prevent any rises and dents in the basic plane of the glass holder.

Next, the glass plate filled with the sample is set in a powder X-ray diffractometer, and a diffraction pattern (XRD pattern; X-Ray Diffraction pattern) is obtained using Cu-Kα rays.

When the target active material to be measured is included in the electrode material of a secondary battery, first, a measurement sample is prepared according to the previously described procedure. The obtained measurement sample is affixed directly to the glass holder, and measured.

Upon which, the position of the peak originating from the electrode substrate such as a metal foil is measured in advance. The peaks of other components such as an electro-conductive agent and a binder are also measured in advance. In such a case that the peaks of the substrate and active material overlap with each other, it is desirable that the layer including the active material (e.g., the later-described electrode layer) is separated from the substrate, and subjected to measurement. This is in order to separate the overlapping peaks when quantitatively measuring the peak intensity. For example, the electrode layer can be separated by irradiating the electrode substrate with an ultrasonic wave in a solvent.

In the case where there is high degree of orientation in the sample, there is the possibility of deviation of peak position and variation in an intensity ratio, depending on how the sample is filled. For example, in some cases, there may be observed from the results of the later-described Rietveld analysis, an orientation in which crystal planes are arranged in a specific direction when packing the sample, depending on the shapes of particles. Alternatively, in some cases, influence due to orientation can be seen from measuring of a measurement sample that had been obtained by taking out from a battery.

Such a sample having high orientation is measured using a capillary (cylindrical glass narrow tube). Specifically, the sample is inserted into the capillary, which is then mounted on a rotary sample table and measured while being rotated. Such a measuring method can provide the result with the influence of orientation reduced.

When an intensity ratio measured by this method is different from an intensity ratio measured using the flat plate holder or glass holder described above, the influence due to the orientation is considerable, such that measurement results of the rotary sample table are adopted.

As an apparatus for powder X-ray diffraction measurement, SmartLab manufactured by Rigaku is used, for example. Measurement is performed under the following condition:
X-ray source: Cu target
Output: 45 kV, 200 mA
soller slit: 5 degrees in both incident light and received light
step width (2θ): 0.02 deg
scan speed: 20 deg/min
semiconductor detector: D/teX Ultra 250
sample plate holder: flat glass sample plate holder (0.5 mm thick)
measurement range: range within 5° ≤ 2θ ≤ 90°

When another apparatus is used, in order to obtain measurement results equivalent to those described above, measurement using a standard Si powder for powder X-ray diffraction is performed, and measurement is conducted with conditions adjusted such that a peak intensity and a peak top position correspond to those obtained using the above apparatus.

Conditions of the above powder X-ray diffraction measurement is set, such that an XRD pattern applicable to Rietveld analysis is obtained. In order to collect data for Rietveld analysis, specifically, the measurement time or X-ray intensity is appropriately adjusted in such a manner that the step width is made 1/3 to 1/5 of the minimum half width of the diffraction peaks, and the intensity at the peak position of strongest reflected intensity is 5,000 cps or more. Rietveld analysis can be performed, for example, based on the method described in "Funmatsu X sen Kaisetsu no Jissai (Reality of Powder X-Ray Analysis)", first edition (2002), X-Ray Analysis Investigation Conversazione, The Japan Society for Analytical Chemistry, written and edited by Izumi Nakai and Fujio Izumi (Asakura Publishing Co., Ltd.).

Using the above-described method, information on the crystal structure of the measured active material can be obtained. For example, when the active material according to the first approach is measured as described above, the measured active material would be found to include a composite oxide having an orthorhombic structure. In addition, the above-described measurement also allows examination of the symmetry of the crystal structure in the measurement sample, such as the space groups Cmca and Fmmm.

### <Method for Examining Composition of Composite Oxide>

The composition of the composite oxide in the active material can be analyzed using Inductively Coupled Plasma (ICP) emission spectrometry, for example. In this case, the abundance ratios of elements depend on the sensitivity of the analyzing device used. Therefore, when the composition of the composite oxide (titanium-containing composite oxide phase) included in an example of the active material according to the first approach is analyzed using ICP emission spectrometry, for example, the numerical values may deviate from the previously described element ratios due to errors of the measuring device. However, even if the measurement results deviate as described above within the error range of the analyzing device, the example of the active material according to the first approach can sufficiently exhibit the previously described effects.

In order to measure the composition of the active material assembled into a battery according to ICP emission spectrometry, the following procedure is specifically performed.

First, according to the previously described procedure, an electrode including the target active material to be measured is taken out from a secondary battery, and washed. The washed electrode is put in a suitable solvent, and irradiated with an ultrasonic wave. For example, an electrode is put into ethyl methyl carbonate in a glass beaker, and the glass beaker is vibrated in an ultrasonic washing machine, and thereby an electrode layer including the electrode active material can be separated from a current collector.

Next, the separated electrode layer is dried under reduced pressure. The obtained electrode layer is ground in a mortar or the like to provide a powder including the target active material, electro-conductive agent, binder, and the like. By dissolving the powder in an acid, a liquid sample including the active material can be prepared. Here, hydrochloric acid, nitric acid, sulfuric acid, hydrogen fluoride, and the like may be used as the acid. The components in the active material, for example, composition of the titanium-containing composite oxide phase can be found by subjecting the liquid sample to ICP emission spectrometric analysis.

### <Method of Measuring Carbon Amount>

The amount of carbon in the active material can be measured by using as the measurement sample, for example, the active material extracted from an electrode as follows. First, the electrode, which has been washed as described above, is placed in water, and thereby the electrode layer is deactivated in water. The active material can be extracted from the deactivated electrode using, for example, a centrifugation apparatus. The extraction treatment is carried out as follows: for example, when polyvinylidene fluoride (PVdF) is used as a binder, the binder component is removed by washing with N-methyl-2-pyrrolidone (NMP) or the like, and then the electro-conductive agent is removed using a mesh having an adequate aperture. If these components slightly remain, they can be removed by heat treatment in the air (e.g., for 30 minutes at 250ºC). The active material extracted from the electrode is dried at 150ºC for 12 hours, weighed in a container, and measured using a measuring device (e.g., CS-444LS manufactured by LECO).

In the case that other active materials are included in the electrode, measurement can be performed as follows.

The active material extracted from the electrode is subjected to measurement by transmission electron microscopy-energy dispersive x-ray spectroscopy (TEM-EDX), and the crystal structure of each particle is identified using the selected area diffraction method. The particles having a diffraction pattern assigned to titanium-containing composite oxide are selected, and the amount of carbon regarding the selected particles is measured. In such a case that the phase of titanium-containing composite oxide does not include particulate forms, a region having a diffraction pattern assigned to the titanium-containing composite oxide is distinguished, for example, to thereby distinguish from other active materials. The amount of carbon is measured regarding the distinguished region. In addition, the areas where carbon is present can be found by acquiring carbon mapping by EDX, when selecting the particles to be the measurement target, or distinguishing the region to be measured.

The weight of carbon that covers the surface of the composite oxide phase extracted in the above-described way can be obtained as follows. First, the weight of the active material including the carbon-coated composite oxide phase (for example, composite oxide particles) is obtained as Wc. Next, the active material including the carbon-coated composite oxide phase is calcined in air at a temperature of 800°C for 3 hours. The carbon coating is thus burned off. By obtaining the weight after the calcination, a weight W of the composite oxide before carbon coating can be obtained. A carbon-coat weight ratio M on the composite oxide phase can be obtained from (Wc - W)/W.

### <Method of Measuring Carboxyl Group in Carbon Coating Layer>

The amount of the carboxyl group in the carbon coating layer can be obtained by measuring the carbon amount by XPS measurement and then selectively quantitatively analyzing the carboxyl group by a vapor-phase chemical modification method. Let Cₜₒₜₐₗ be the total carbon amount based on a quantification result obtained by peak fitting of C1s in XPS measurement. In the peak fitting of C1s at this time, a COO component concentration [COO] is obtained. The thus obtained COO component includes functional groups other than the carboxyl group as well; however, by performing chemical modification using trifluoroethanol, the carboxyl group can be selectively quantified. Letting [COOH] be the carboxyl group amount obtained by the quantification method, [COOH]/Cₜₒₜₐₗ x 100% is defined as the carboxyl group concentration on the carbon coating layer. As described above, the concentration preferably ranges from 0.01% to 5% ([COOH]/Cₜₒₜₐₗ x 100%).

In addition, TOF-SIMS (Time Of Flight-Secondary Ion Mass Spectrometry) measurement may further be used in the following manner, to thereby obtain the amount of carboxyl group that has neutralized the alkali component on the surface of the composite oxide phase. A specific example in which Na is contained as a basic component will be described.

First, let Cₜₒₜₐₗ be the total carbon amount based on a quantification result obtained by peak fitting of C1s in XPS measurement. In the peak fitting of C1s at this time, the COO component concentration [COO] is obtained. Next, the carboxyl group is selectively quantified by chemical modification using trifluoroethanol, thereby obtaining a carboxyl group amount [COOH]. Next, if the presence of, for example, COONa (sodium carboxylate group) can be confirmed using TOF-SIMS, the COO component ([COO] - [COOH]) other than the carboxyl group is defined as a [COONa] amount. [COONa]/Cₜₒₜₐₗ x 100% is defined as the concentration (= COONa concentration) of Na neutralized by the carboxyl group on the carbon coating layer. The concentration preferably ranges from 0.01% to 5% ([COONa]/Cₜₒₜₐₗ x 100%).

An example in which the composite oxide phase contains Na as a basic component has been described above. However, the same method as described above can be applied to a case in which alkali metal elements and alkaline earth metal elements other than Na are contained.

### <Method of Measuring Thickness of Carbon Coating Layer>

To measure the thickness of the carbon coating layer, for example, a TEM (Transmission Electron Microscope) is used.

Though it is difficult to directly observe the carbon coating layer, the thickness of the layer can be investigated by the following method. First, for example, Ru is deposited on an active material particle, and a particle cross-section is exposed by an FIB (Focused Ion Beam) processing. A gap observed between the deposited Ru and the active material is examined from TEM images of the section. A point within one particle where the gap is most clearly distinguished is selected, and the gap is regarded as the carbon coating layer. Fifty active material particles extracted at random are observed by the same method, and the average value of the widths of gaps (the distance between the deposited Ru and the active material) is defined as the thickness of the carbon coating layer.

### <Measurement of pH and Measurement of Specific Surface Area>

The pH of the active material according to the approach and the pH of the composite oxide contained in the active material mean those measured based on the cold extraction method of JIS K 5101-17-2: 2004. More specifically, the active material or composite oxide (a composite oxide that does not include a carbon coating layer) is used as a measurement sample, and the pH of the measurement sample is obtained in the following manner.

First, 1 g of measurement sample is put in 50 g of distilled water and vigorously shaken for 1 min. After the measurement sample is left standing for 5 min, the pH of the aqueous solvent is measured using a pH meter, and determined as the value of the pH of the measurement sample.

Note that the pH of the measurement sample may change in accordance with the specific surface area. That is, even if the same measurement sample is used, the specific surface area may be different depending on a difference in the size of the measurement sample upon measurement, and as a result, a different pH may be exhibited for each sample.

For the composite oxide contained in the active material according to the approach, a pH within the above-described range (from 10.5 to 12) is exhibited in measurement when the specific surface area (a specific surface area that does not include the carbon coating layer) is equal to or greater than 0.5 m²/g and less than 50 m²/g. More preferably, a pH within the above-described range is exhibited in measurement when the specific surface area of the composite oxide is from 3 m²/g to 30 m²/g. Note that in the active material according to the approach, a pH outside the above-described pH range may be exhibited if the specific surface area of the composite oxide falls outside the range of 0.5 m²/g or greater and less than 50 m²/g, or the range of from 3 m²/g to 30 m²/g.

For example, the above-described BET method may be used to measure the specific surface area of the composite oxide.

The active material according to the first approach contains a titanium-containing composite oxide phase and a carboxyl group-containing carbon coating layer. The titanium-containing composite oxide phase includes a crystal structure belonging to the space group Cmca and/or the space group Fmmm. The carboxyl group-containing carbon coating layer covers at least a part of a surface of the titanium-containing composite oxide phase. According to this active material, it is possible to realize a secondary battery that can exhibit a high energy density and is excellent in output performance and life performance at a high temperature.

### (Second Approach)

According to a second approach, there is provided a secondary battery including a negative electrode, a positive electrode, and an electrolyte. As the negative electrode, the secondary battery includes an electrode that includes the active material according to the first approach as a battery active material.

The secondary battery according to the second approach may further include a separator provided between the positive electrode and the negative electrode. The negative electrode, the positive electrode, and the separator can structure an electrode group. The electrolyte may be held in the electrode group.

The secondary battery according to the second approach may further include a container member that houses the electrode group and the electrolyte.

The secondary battery according to the second approach may further include a negative electrode terminal electrically connected to the negative electrode and a positive electrode terminal electrically connected to the positive electrode.

The secondary battery according to the second approach may be, for example, a lithium secondary battery. The secondary battery also includes nonaqueous electrolyte secondary batteries containing nonaqueous electrolyte(s).

Hereinafter, the negative electrode, the positive electrode, the electrolyte, the separator, the container member, the negative electrode terminal, and the positive electrode terminal will be described in detail.

### 1) Negative Electrode

The negative electrode may include a negative electrode current collector and a negative electrode active material-containing layer. The negative electrode active material-containing layer may be formed on one surface or both of reverse surfaces of the negative electrode current collector. The negative electrode active material-containing layer may include a negative electrode active material, and optionally an electro-conductive agent and a binder.

The active material according to the first approach may be contained in the negative electrode active material-containing layer as the negative electrode active material. The negative electrode using the active material according to the first approach can be stably charged and discharged even at a high temperature of 45°C or more within a potential range of from 1.45 V (vs. Li/Li⁺) to 1.0 V (vs. Li/Li⁺). For this reason, the secondary battery according to the second approach including such a negative electrode can exhibit a high energy density and obtain excellent life performance even at a high temperature of 45°C or more.

In the negative electrode, the active material according to the first approach may be singly used as the negative electrode active material, or two or more kinds of the active material according to the first approach may be used. Furthermore, a mixture where one kind or two or more kinds of the active material according to the first approach is further mixed with one kind or two or more kinds of another active material may also be used as the negative electrode active material. Examples of other active materials include lithium titanate having a ramsdellite structure (e.g., Li₂Ti₃O₇), lithium titanate having a spinel structure (e.g., Li₄Ti₅O₁₂), monoclinic titanium dioxide (TiO₂), anatase type titanium dioxide, rutile type titanium dioxide, a hollandite type titanium composite oxide, an orthorhombic Na-containing titanium composite oxide (e.g., Li₂Na₂Ti₆O₁₄), and a monoclinic niobium titanium composite oxide (e.g., Nb₂TiO₇).

The electro-conductive agent is added to improve a current collection performance and to suppress the contact resistance between the negative electrode active material and the current collector. Examples of the electro-conductive agent include carbonaceous substances such as vapor grown carbon fiber (VGCF), acetylene black, carbon black, and graphite. One of these may be used as the electro-conductive agent, or two or more may be used in combination as the electro-conductive agent. Alternatively, instead of using an electro-conductive agent, a carbon coating other than the carboxyl group-containing carbon coating layer or an electro-conductive inorganic material coating may be applied to the surface of the negative electrode active material particle.

The binder is added to fill gaps among the dispersed negative electrode active material and also to bind the negative electrode active material with the negative electrode current collector. Examples of the binder include polytetrafluoroethylene (PTFE), polyvinylidene fluoride (PVdF), fluorine rubber, styrene-butadiene rubber, polyacrylate compounds, and imide compounds. One of these may be used as the binder, or two or more may be used in combination as the binder.

The active material, electro-conductive agent and binder in the negative electrode active material-containing layer are preferably blended in proportions within ranges of 68% by mass to 96% by mass, 2% by mass to 30% by mass, and 2% by mass to 30% by mass, respectively. When the amount of electro-conductive agent is 2% by mass or more, the current collection performance of the negative electrode active material-containing layer can be improved. When the amount of binder is 2% by mass or more, binding between the negative electrode active material-containing layer and negative electrode current collector is sufficient, and excellent cycling performances can be expected. On the other hand, an amount of each of the electro-conductive agent and binder is preferably 28% by mass or less, in view of increasing the capacity.

As the negative electrode current collector, a material which is electrochemically stable at the lithium insertion and extraction potential (vs. Li/Li⁺) of the negative electrode active material is used. The negative electrode current collector is preferably made of copper, nickel, stainless steel, aluminum, or an aluminum' alloy including one or more elements selected from the group consisting of Mg, Ti, Zn, Mn, Fe, Cu, and Si. The thickness of the negative electrode current collector is preferably within a range of from 5 µm to 20 µm. The negative electrode current collector having such a thickness can maintain balance between the strength and weight reduction of the negative electrode.

The density of the negative electrode active material-containing layer (excluding the current collector) is preferably within a range of from 1.8 g/cm³ to 2.8 g/cm³. The negative electrode, in which the density of the negative electrode active material-containing layer is within this range, is excellent in energy density and ability to hold the electrolyte. The density of the negative electrode active material-containing layer is more preferably within a range of from 2.1 g/cm³ to 2.6 g/cm³.

The negative electrode may be produced by the following method, for example. First, a negative electrode active material, an electro-conductive agent, and a binder are suspended in a solvent to prepare a slurry. The slurry is applied onto one surface or both of reverse surfaces of a negative electrode current collector. Next, the applied slurry is dried to form a layered stack of the negative electrode active material-containing layer and the negative electrode current collector. Then, the layered stack is subjected to pressing. The negative electrode can be produced in this manner. Alternatively, the negative electrode may also be produced by the following method. First, a negative electrode active material, an electro-conductive agent, and a binder are mixed to obtain a mixture. Next, the mixture is formed into pellets. Then the negative electrode can be obtained by arranging the pellets on the negative electrode current collector.

### 2) Positive Electrode

The positive electrode may include a positive electrode current collector and a positive electrode active material-containing layer. The positive electrode active material-containing layer may be formed on one surface or both of reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may include one kind of positive electrode active material, or alternatively, include two or more kinds of positive electrode active materials. Examples of the oxide and sulfide include compounds capable of having Li (lithium) and Li ions be inserted and extracted.

Examples of such compounds include manganese dioxides (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y < 1, and LiₓCoPO₄; 0 < x ≤ 1), iron sulfates [Fe₂(SO₄)₃], vanadium oxides (e.g., V₂O₅), and lithium nickel cobalt manganese composite oxides (LiNi_{1-x-y}CoₓMn_{y}O₂; 0 < x < 1, 0 < y < 1, x + y < 1). As the active material, one of these compounds may be used singly, or plural compounds may be used in combination.

More preferred examples of the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiNi_{1-y}Co_{y}O₂; 0 < x ≤ 1), lithium manganese nickel composite oxides having a spinel structure (e.g., LiₓMn_{2-y}Ni_{y}O₄; 0 < x ≤ 1, 0 < y < 2), lithium manganese cobalt composite oxides (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiNi_{1-x-y}CoₓMn_{y}O₂; 0 < x < 1, 0 < y < 1, x + y < 1). The positive electrode potential can be made high by using these positive electrode active materials.

When a room temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The primary particle size of the positive electrode active material is preferably within a range of from 100 nm to 1 µm. The positive electrode active material having a primary particle size of 100 nm or more is easy to handle during industrial production. In the positive electrode active material having a primary particle size of 1 µm or less, diffusion of lithium ions within solid can proceed smoothly.

The specific surface area of the positive electrode active material is preferably within a range of from 0.1 m²/g to 10 m²/g. The positive electrode active material having a specific surface area of 0.1 m²/g or more can secure sufficient sites for inserting and extracting Li ions. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluorine rubber, polyacrylate compounds, and imide compounds. One of these may be used as the binder, or two or more may be used in combination as the binder.

The electro-conductive agent is added to improve a current collection performance and to suppress the contact resistance between the positive electrode active material and the positive electrode current collector. Examples of the electro-conductive agent include carbonaceous substances such as vapor grown carbon fiber (VGCF), acetylene black, carbon black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions within ranges of 80% by mass to 98% by mass, and 2% by mass to 20% by mass, respectively.

When the amount of the binder is 2% by mass or more, sufficient electrode strength can be achieved. When the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, the decomposition of a electrolyte can be reduced during storage under high temperatures.

The positive electrode current collector is preferably an aluminum foil, or an aluminum alloy foil containing one or more elements selected from the group consisting of Mg, Ti, Zn, Ni, Cr, Mn, Fe, Cu, and Si.

The thickness of the aluminum foil or aluminum alloy foil is preferably within a range of from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode may be produced by the following method, for example. First, a positive electrode active material, an electro-conductive agent, and a binder are suspended in a solvent to prepare a slurry. The slurry is applied onto one surface or both of reverse surfaces of a positive electrode current collector. Next, the applied slurry is dried to form a layered stack of the positive electrode active material-containing layer and the positive electrode current collector. Then, the layered stack is subjected to pressing. The positive electrode can be produced in this manner. Alternatively, the positive electrode may also be produced by the following method. First, a positive electrode active material, an electro-conductive agent, and a binder are mixed to obtain a mixture. Next, the mixture is formed into pellets. Then the positive electrode can be obtained by arranging the pellets on the positive electrode current collector.

### 3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably within a range of from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); γ-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions, a polymer solid electrolyte, an inorganic solid electrolyte, or the like may be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in nonaqueous electrolyte batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

### 4) Separator

The separator may be made of, for example, a porous film or synthetic resin nonwoven fabric including polyethylene, polypropylene, cellulose, or polyvinylidene fluoride (PVdF). In view of safety, a porous film made of polyethylene or polypropylene is preferred. This is because such a porous film melts at a fixed temperature and thus able to shut off current.

### 5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 1 % by mass or less.

The shape of the container member is not particularly limited. The shape of the container member may be, for example, flat (thin), square, cylinder, coin, or button-shaped. Depending on battery size, the container member may be, for example, a container member for compact batteries installed in mobile electronic devices, or container member for large batteries installed on vehicles such as two-wheeled to four-wheeled automobiles, railway cars, and the like.

### 6) Negative electrode Terminal

The negative electrode terminal may be made of a material that is electrochemically stable at the potential at which Li is inserted into and extracted from the above-described negative electrode active material, and has electrical conductivity. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

### 7) Positive Electrode Terminal

The positive electrode terminal may be made of, for example, a material that is electrically stable in the potential range of 3 V to 5 V (vs. Li/Li⁺) relative to the oxidation-and-reduction potential of lithium, and has electrical conductivity. Examples of the material for the positive electrode terminal include aluminum and an aluminum alloy containing one or more selected from the group consisting of Mg, Ti, Zn, Mn, Fe, Cu, Si, and the like. The positive electrode terminal is preferably made of the same material as the positive electrode current collector, in order to reduce contact resistance with the positive electrode current collector.

Next, the secondary battery according to the second approach will be more specifically described with reference to the drawings.

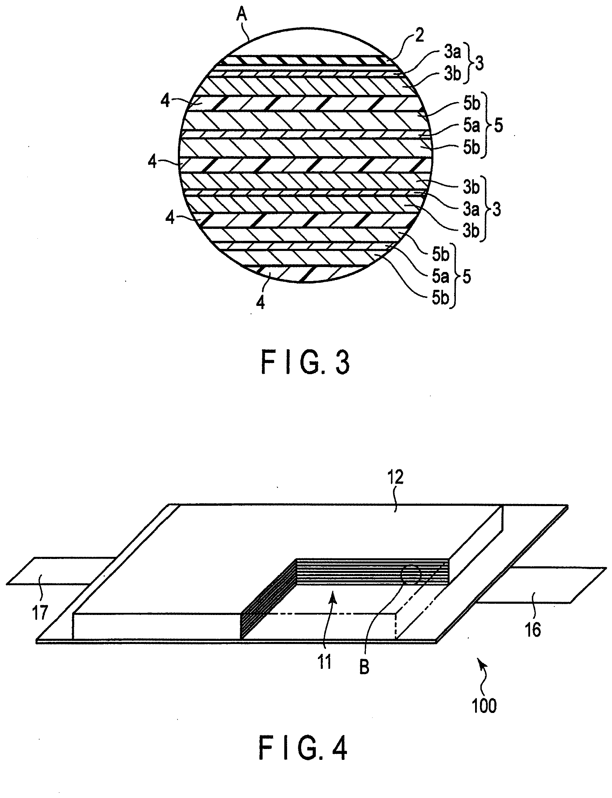

FIG. 2 is a cross-sectional view schematically showing an example of a secondary battery according to the second approach. FIG. 3 is an enlarged cross-sectional view of section A of the secondary battery shown in FIG. 2.

The secondary battery 100 shown in FIGS. 2 and 3 includes a bag-shaped container member 2 shown in FIG. 2, an electrode group 1 shown in FIGS. 2 and 3, and an electrolyte, which is not shown. The electrode group 1 and the electrolyte are housed in the container member 2. The electrolyte (not shown) is held in the electrode group 1.

The bag-shaped container member 2 is made of a laminate film including two resin layers and a metal layer sandwiched between the resin layers.

As shown in FIG. 2, the electrode group 1 is a wound electrode group in a flat form. The wound electrode group 1 in a flat form includes a negative electrode 3, a separator 4, and a positive electrode 5, as shown in FIG. 3. The separator 4 is sandwiched between the negative electrode 3 and the positive electrode 5.

The negative electrode 3 includes a negative electrode current collector 3a and a negative electrode active material-containing layer 3b. The active material according to the first approach is included in the negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 3. For the other portions of the negative electrode 3, negative electrode active material-containing layers 3b are formed on both of reverse surfaces of the negative electrode current collector 3a.

The positive electrode 5 includes a positive electrode current collector 5a and positive electrode active material-containing layers 5b formed on both of reverse surfaces of the positive electrode current collector 5a.

As shown in FIG. 2, a negative electrode terminal 6 and positive electrode terminal 7 are positioned in vicinity of the outer peripheral edge of the wound electrode group 1. The negative electrode terminal 6 is connected to a portion of the negative electrode current collector 3a of the negative electrode 3 positioned outermost. The positive electrode terminal 7 is connected to the positive electrode current collector 5a of the positive electrode 5 positioned outermost. The negative electrode terminal 6 and the positive electrode terminal 7 extend out from an opening of the bag-shaped container member 2. The bag-shaped container member 2 is heat-sealed by a thermoplastic resin layer arranged on the interior thereof.

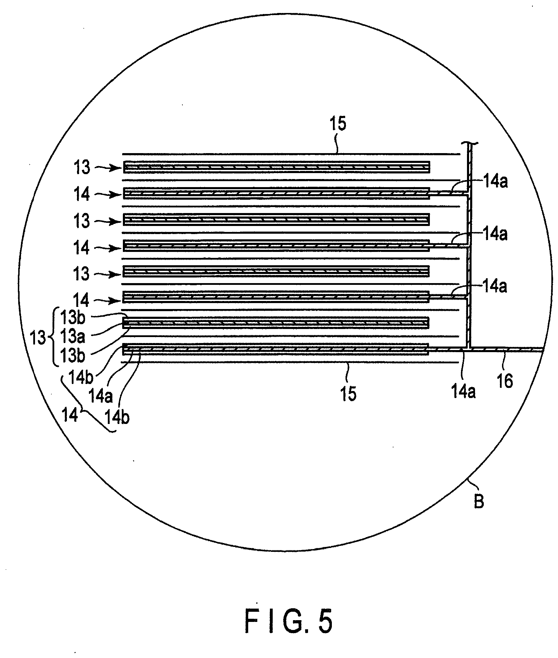

The secondary battery according to the second approach is not limited to the secondary battery of the structure shown in FIGS. 2 and 3, and may be, for example, a battery of a structure as shown in FIGS. 4 and 5.

FIG. 4 is a partially cut-out perspective view schematically showing another example of a secondary battery according to the second approach. FIG. 5 is an enlarged cross-sectional view of section B of the secondary battery shown in FIG. 4.

The secondary battery 100 shown in FIGS. 4 and 5 includes an electrode group 11 shown in FIGS. 4 and 5, a container member 12 shown in FIG. 4, and an electrolyte, which is not shown. The electrode group 11 and the electrolyte are housed in the container member 12. The electrolyte is held in the electrode group 11.

The container member 12 is made of a laminate film including two resin layers and a metal layer sandwiched between the resin layers.

As shown in FIG. 5, the electrode group 11 is a stacked electrode group. The stacked electrode group 11 has a structure in which positive electrodes 13 and negative electrodes 14 are alternately stacked with separator(s) 15 sandwiched therebetween.

The electrode group 11 includes plural positive electrodes 13. Each of the plural positive electrodes 13 includes a positive electrode current collector 13a, and positive electrode active material-containing layers 13b supported on both of reverse surfaces of the positive electrode current collector 13a. The electrode group 11 includes plural negative electrodes 14. Each of the plural negative electrodes 14 includes a negative electrode current collector 14a, and negative electrode active material-containing layers 14b supported on both of reverse surfaces of the negative electrode current collector 14a. An end of the negative electrode current collector 14a of each of the negative electrodes 14 protrudes out from the negative electrode 14. The protruded negative electrode current collector 14a is electrically connected to a strip-shaped negative electrode terminal 16. The tip of the strip-shaped negative electrode terminal 16 is extended out from the container member 12. Although not shown in the drawings, an end of each positive electrode current collector 13a of the positive electrodes 13, which is positioned on the side opposite to the protruded end of the negative electrode current collector 14a, protrude out from the positive electrode 13. The positive electrode current collector 13a protruding out from the positive electrode 13 is electrically connected to a strip-shaped positive electrode terminal 17. The tip of the strip-shaped positive electrode terminal 17 is positioned on the opposite side from the negative electrode terminal 16, and extended out from the container member 12.

The secondary battery according to the second approach includes the active material according to the first approach. Thus, the secondary battery according to the second approach can exhibit a high energy density and a high battery voltage, while being able to exhibit excellent output performance and high temperature life performance.

In addition, when the secondary battery is, for example, combined with a 12 V lead storage battery for automobiles to thereby construct a motor assist type hybrid car or an idling stop system (a.k.a., automatic start-stop system), it is possible to design a setting of battery pack potential that is capable of preventing over-discharge of a lead storage battery upon a high load or is capable of adapting to a fluctuation in potential upon an input of regenerative energy. This is because, a voltage change corresponding to the charge/discharge state of the secondary battery of the second approach can be obtained, and thus, the state-of-charge (SOC) can be managed based on the voltage change. Accordingly, voltage management is easy, and the secondary battery can be favorably used in a system where the battery is combined with the lead storage battery.

Further, in the case where a spinel lithium titanate (Li₄Ti₅O₁₂) is used for the negative electrode, the average operating potential is low. Thus, it is necessary to connect six batteries in series, in order to obtain a voltage compatible with a lead storage battery for automobiles. On the other hand, when the active material of the first approach is used as the negative electrode active material, the average operating potential of the negative electrode is decreased, and the battery voltage becomes high. Thus, even if the number of in-series connection of the battery cells in the battery pack is changed to five, it is possible to configure a battery pack having high voltage compatibility with 12 V lead storage batteries for automobiles. Namely, the secondary battery according to the second approach is able to provide a small size battery pack capable of exhibiting a low resistance and a high energy density at a low cost.

### (Third Approach)

According to a third approach, a battery module is provided. The battery module according to the third approach includes plural secondary batteries according to the second approach.

In the battery module according to the third approach, each of the single batteries may be arranged electrically connected in series, in parallel, or in a combination of in-series connection and in-parallel connection.

An example of the battery module according to the third approach will be described next with reference to the drawings.

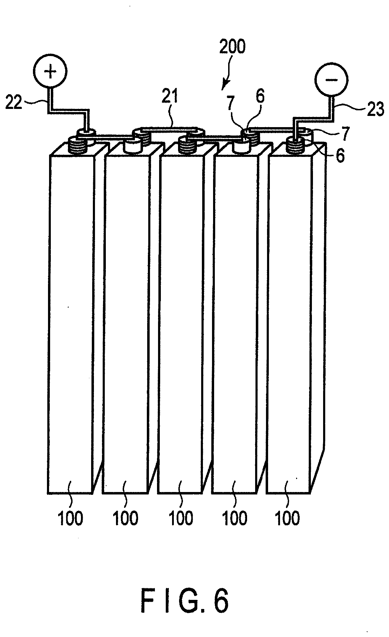

FIG. 6 is a perspective view schematically showing an example of the battery module according to the third approach. A battery module 200 shown in FIG. 6 includes five single-batteries 100, four bus bars 21, a positive electrode-side lead 22, and a negative electrode-side lead 23. Each of the five single-batteries 100 is a secondary battery according to the second approach.

Each bus bar 21 connects a negative electrode terminal 6 of one single-battery 100 and a positive electrode terminal 7 of the single-battery 100 positioned adjacent. The five single-batteries 100 are thus connected in series by the four bus bars 21. That is, the battery module 200 shown in FIG. 6 is a battery module of five in-series connection.

As shown in FIG. 6, the positive electrode terminal 7 of the single-battery 100 located at one end on the left among the row of the five single-batteries 100 is connected to the positive electrode-side lead 22 for external connection. In addition, the negative electrode terminal 6 of the single-battery 100 located at the other end on the right among the row of the five single-batteries 100 is connected to the negative electrode-side lead 23 for external connection.

The battery module according to the third approach includes the secondary battery according to the second approach. Hence, the battery module can exhibit a high energy density and is excellent in output performance and life performance at a high temperature.

### (Fourth Approach)

According to a fourth approach, a battery pack is provided. The battery pack includes a battery module according to the third approach. The battery pack may include a single secondary battery according to the second approach, in place of the battery module according to the third approach.

The battery pack according to the fourth approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the fourth approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the fourth approach will be described with reference to the drawings.

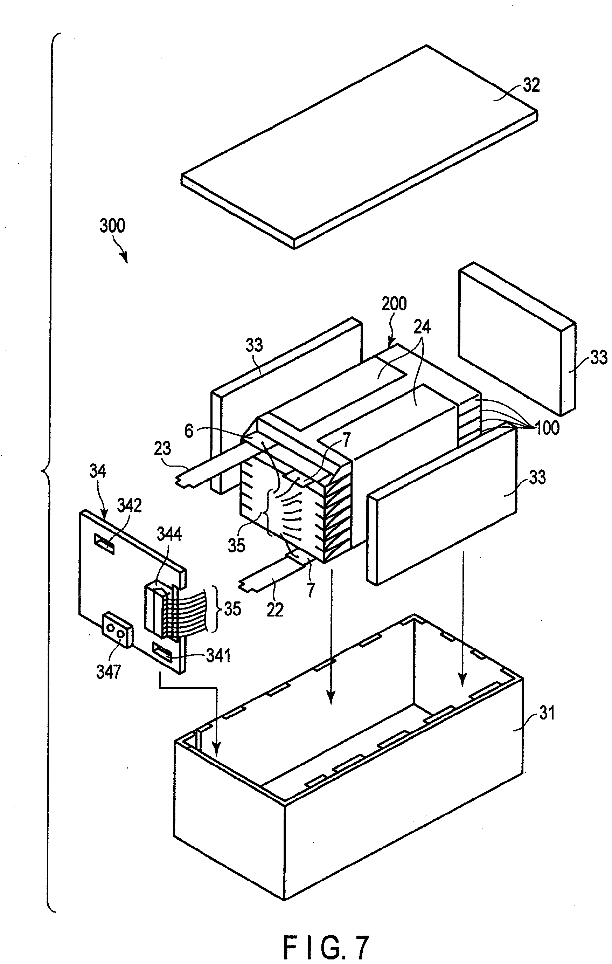

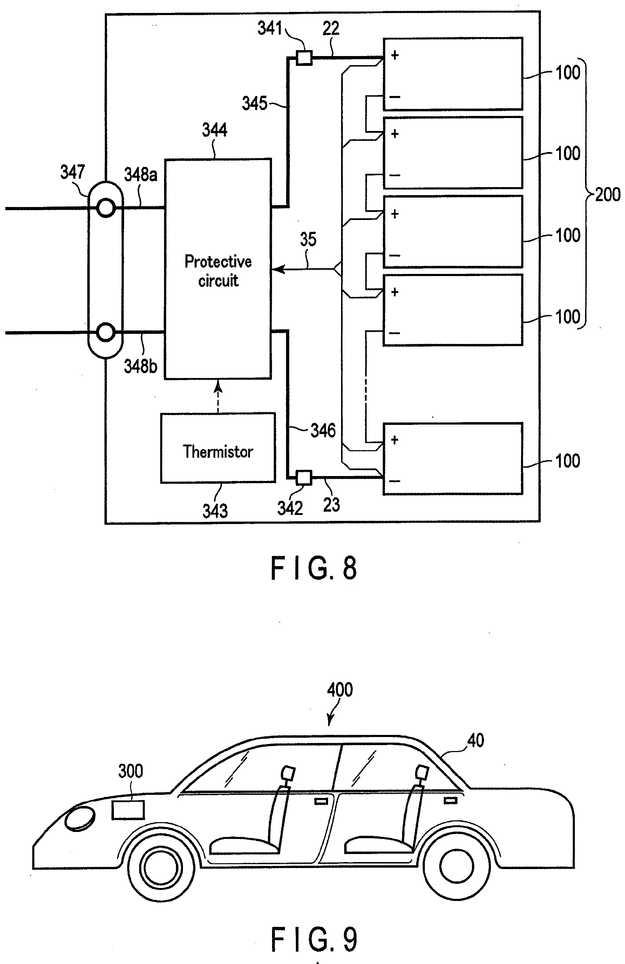

FIG. 7 is an exploded perspective view schematically showing an example of the battery pack according to the fourth approach. FIG. 8 is a block diagram showing an example of an electric circuit of the battery pack shown in FIG. 7.

A battery pack 300 shown in FIGS. 7 and 8 includes a housing container 31, a lid 32, protective sheets 33, a battery module 200, a printed wiring board 34, wires 35, and an insulating plate (not shown).

The housing container 31 is configured to house the protective sheets 33, the battery module 200, the printed wiring board 34, and the wires 35. The lid 32 covers the housing container 31 to house the battery module 200 and the like. Although not shown, opening(s) or connection terminal(s) for connecting to external device(s) and the like are provided on the housing container 31 and lid 32.

The protective sheets 33 are arranged on both inner surfaces of the housing container 31 along the long-side direction and on the inner surface along the short-side direction facing the printed wiring board 34 across the battery module 200 positioned therebetween. The protective sheets 33 are made of, for example, resin or rubber.

The battery module 200 includes plural single-batteries 100, a positive electrode-side lead 22, a negative electrode-side lead 23, and an adhesive tape 24. The battery module 200 may alternatively include only one single-battery 100.

A single-battery 100 has a structure shown in FIGS. 2 and 3. At least one of the plural single-batteries 100 is a secondary battery according to the second approach. The plural single-batteries 100 are stacked such that the negative electrode terminals 6 and the positive electrode terminals 7, which extend outside, are directed toward the same direction. The plural single-batteries 100 are electrically connected in series, as shown in FIG. 8. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tape 24 fastens the plural single-batteries 100. The plural single-batteries 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural single-batteries 100.

One end of the positive electrode-side lead 22 is connected to the positive electrode terminal 7 of the single-battery 100 located lowermost in the stack of the single-batteries 100. One end of the negative electrode-side lead 23 is connected to the negative electrode terminal 6 of the single-battery 100 located uppermost in the stack of the single-batteries 100.

The printed wiring board 34 includes a positive electrode-side connector 341, a negative electrode-side connector 342, a thermistor 343, a protective circuit 344, wirings 345 and 346, an external power distribution terminal 347, a plus-side (positive-side) wire 348a, and a minus-side (negative-side) wire 348b. One principal surface of the printed wiring board 34 faces the surface of the battery module 200 from which the negative electrode terminals 6 and the positive electrode terminals 7 extend out. An insulating plate (not shown) is disposed in between the printed wiring board 34 and the battery module 200.

The positive electrode-side connector 341 is provided with a through hole. By inserting the other end of the positive electrode-side lead 22 into the though hole, the positive electrode-side connector 341 and the positive electrode-side lead 22 become electrically connected. The negative electrode-side connector 342 is provided with a through hole. By inserting the other end of the negative electrode-side lead 23 into the though hole, the negative electrode-side connector 342 and the negative electrode-side lead 23 become electrically connected.

The thermistor 343 is fixed to one principal surface of the printed wiring board 34. The thermistor 343 detects the temperature of each single-battery 100 and transmits detection signals to the protective circuit 344.

The external power distribution terminal 347 is fixed to the other principal surface of the printed wiring board 34. The external power distribution terminal 347 is electrically connected to device(s) that exists outside the battery pack 300.

The protective circuit 344 is fixed to the other principal surface of the printed wiring board 34. The protective circuit 344 is connected to the external power distribution terminal 347 via the plus-side wire 348a. The protective circuit 344 is connected to the external power distribution terminal 347 via the minus-side wire 348b. In addition, the protective circuit 344 is electrically connected to the positive electrode-side connector 341 via the wiring 345. The protective circuit 344 is electrically connected to the negative electrode-side connector 342 via the wiring 346. Furthermore, the protective circuit 344 is electrically connected to each of the plural single-batteries 100 via the wires 35.

The protective circuit 344 controls charge and discharge of the plural single-batteries 100. The protective circuit 344 is also configured to cut-off electric connection between the protective circuit 344 and the external power distribution terminal 347 to external device(s), based on detection signals transmitted from the thermistor 343 or detection signals transmitted from each single-battery 100 or the battery module 200.

An example of the detection signal transmitted from the thermistor 343 is a signal indicating that the temperature of the single-battery (single-batteries) 100 is detected to be a predetermined temperature or more. An example of the detection signal transmitted from each single-battery 100 or the battery module 200 is a signal indicating detection of over-charge, over-discharge, and overcurrent of the single-battery (single-batteries) 100. When detecting over-charge or the like for each of the single batteries 100, the battery voltage may be detected, or a positive electrode potential or negative electrode potential may be detected. In the latter case, a lithium electrode to be used as a reference electrode may be inserted into each single battery 100.

Note, that as the protective circuit 344, a circuit included in a device (for example, an electronic device or an automobile) that uses the battery pack 300 as a power source may be used.

Such a battery pack 300 is used, for example, in applications where excellent cycle performance is demanded when a large current is extracted. More specifically, the battery pack 300 is used as, for example, a power source for electronic devices, a stationary battery, an onboard battery for vehicles, or a battery for railway cars. An example of the electronic device is a digital camera. The battery pack 300 is particularly favorably used as an onboard battery.

As described above, the battery pack 300 includes the external power distribution terminal 347. Hence, the battery pack 300 can output current from the battery module 200 to an external device and input current from an external device to the battery module 200 via the external power distribution terminal 347. In other words, when using the battery pack 300 as a power source, the current from the battery module 200 is supplied to an external device via the external power distribution terminal 347. When charging the battery pack 300, a charge current from an external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may be used as the external power distribution terminal.

The battery pack according to the fourth approach includes the secondary battery according to the second approach or the battery module according to the third approach. Hence, the battery pack can exhibit a high energy density and is excellent in output performance and life performance at a high temperature.

In addition, since the secondary battery according to the second approach is included, a voltage change corresponding to the charge-and-discharge state of the battery pack can be obtained. It is therefore possible to manage the SOC (State Of Charge) of the battery pack based on voltage change, and thus, voltage management is easy.

### (Fifth Approach)

According to a fifth approach, a vehicle is provided. The battery pack according to the fourth approach is installed on this vehicle.

In the vehicle according to the fifth approach, the battery pack is configured, for example, to recover regenerative energy from motive force of the vehicle.

Examples of the vehicle according to the fifth approach include two-wheeled to four-wheeled hybrid electric automobiles, two-wheeled to four-wheeled electric automobiles, electric assist bicycles, and railway cars.

In the vehicle according to the fifth approach, the installing position of the battery pack is not particularly limited. For example, the battery pack may be installed in the engine compartment of the vehicle, in rear parts of the vehicle, or under seats.

An example of the vehicle according to the fifth approach is explained below, with reference to the drawings.

FIG. 9 is a cross-sectional view schematically showing an example of a vehicle according to the fifth approach.

A vehicle 400, shown in FIG. 9 includes a vehicle body 40 and a battery pack 300 according to the fourth approach.

In FIG. 9, the vehicle 400 is a four-wheeled automobile. As the vehicle 400, for example, two-wheeled to four-wheeled hybrid electric automobiles, two-wheeled to four-wheeled electric automobiles, electric assist bicycles, and railway cars may be used.

This vehicle 400 may have plural battery packs 300 installed. In such a case, the battery packs 300 may be connected in series, connected in parallel, or connected in a combination of in-series connection and in-parallel connection.

The battery pack 300 is installed in an engine compartment located at the front of the vehicle body 40. The location of installing the battery pack 300 is not particularly limited. The battery pack 300 may be installed in rear sections of the vehicle body 40, or under a seat. The battery pack 300 may be used as a power source of the vehicle 400. The battery pack 300 can also recover regenerative energy of motive force of the vehicle 400.

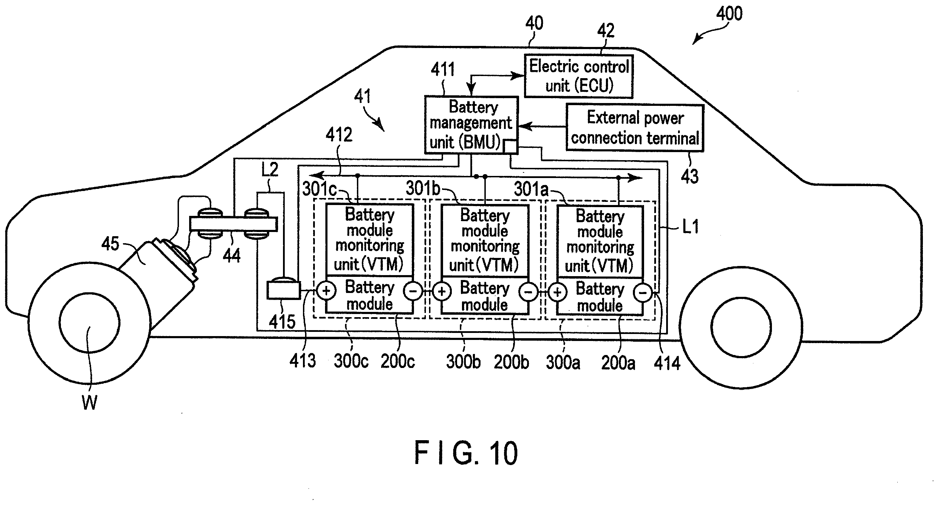

Next, with reference to FIG. 10, an aspect of operation of the vehicle according to the fifth approach is explained.

FIG. 10 is a view schematically showing another example of the vehicle according to the fifth approach. A vehicle 400, shown in FIG. 10, is an electric automobile.

The vehicle 400, shown in FIG. 10, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 10, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The three battery packs 300a, 300b and 300c are electrically connected in series. The battery pack 300a includes a battery module 200a and a battery module monitoring unit (VTM: voltage temperature monitoring) 301a. The battery pack 300b includes a battery module 200b, and a battery module monitoring unit 301b. The battery pack 300c includes a battery module 200c, and a battery module monitoring unit 301c. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the second approach. The battery modules 200a to 200c each perform charging and discharging via a positive electrode terminal 413 and a negative electrode terminal 414.

In order to collect information concerning security of the vehicle power source 41, the battery management unit 411 performs communication with the battery module monitoring units 301a to 301c and collects information such as voltages or temperatures of the single-batteries 100 included in the battery modules 200a to 200c included in the vehicle power source 41.

The communication bus 412 is connected between the battery management unit 411 and the battery module monitoring units 301a to 301c. The communication bus 412 is configured so that multiple nodes (i.e., the battery management unit and one or more battery module monitoring units) share a set of communication lines. The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 10) for switching connection between the positive electrode terminal 413 and the negative electrode terminal 414. The switch unit 415 includes a precharge switch (not shown), which is turned on when the battery modules 200a to 200c are charged, and a main switch (not shown), which is turned on when battery output is supplied to a load. The precharge switch and the main switch include a relay circuit (not shown), which is turned on or off based on a signal provided to a coil disposed near the switch elements.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 controls an output voltage based on control signals from the battery management unit 411 or the vehicle ECU 42, which controls the entire operation of the vehicle.

The drive motor 45 is rotated by electric power supplied from the inverter 44. The rotation is transferred to an axle and driving wheels W via a differential gear unit, for example.

The vehicle 400 also includes a regenerative brake mechanism, though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The direct current is inputted into the vehicle power source 41.

One terminal of a connecting line L1 is connected via a current detector (not shown) in the battery management unit 411 to the negative electrode terminal 414 of the vehicle power source 41. The other terminal of the connecting line L1 is connected to a negative electrode input terminal of the inverter 44.

One terminal of a connecting line L2 is connected via the switch unit 415 to the positive electrode terminal 413 of the vehicle power source 41. The other terminal of the connecting line L2 is connected to a positive electrode input terminal of the inverter 44.

The external terminal 43 is connected to the battery management unit 411. The external terminal 43 is able to connect, for example, to an external power source.

The vehicle ECU 42 cooperatively controls the battery management unit 411 together with other units in response to inputs operated by a driver or the like, thereby performing the management of the whole vehicle. Data concerning the security of the vehicle power source 41, such as a remaining capacity of the vehicle power source 41, are transferred between the battery management unit 411 and the vehicle ECU 42 via communication lines.

The vehicle according to the fifth approach includes the battery pack according to the fourth approach. Hence, since the battery pack exhibits a high energy density and excellent output performance, a high-performance vehicle can be provided. Additionally, since the battery pack exhibits excellent high-temperature life performance, the reliability of the vehicle is high.

### [Examples]

Hereinafter, the above approaches will be described in more detail by way of Examples. The identification of a crystal phase and estimation of a crystal structure of each of the synthesized orthorhombic composite oxide (titanium-containing composite oxide phase) were performed by a powder X-ray diffraction method using Cu-Kα rays. The composition of a product was analyzed by an ICP method to examine that a target product was obtained.

### (Example 1)

In Example 1, a beaker cell of Example 1 was produced according to the following procedure.

### <Preparation of Active Material>

For the purpose of obtaining a composition shown in Table 2, lithium carbonate (Li₂CO₃) serving as an Li source, sodium carbonate (Na₂CO₃) serving as an M1 source (Na source), and titanium dioxide (TiO₂) serving as a Ti source were mixed at mole fractions shown in Table 3. The mixture was pre-calcined in a muffle furnace at 650°C for 2 hours and at 800°C for 12 hours. Next, the pre-calcined product was ground by a grinder to resolve agglomeration.

Next, main calcination was performed by heating the pre-calcined product to 900°C for 12 hours in the muffle furnace. At this time, to prevent vaporization of Li, the outside of the pre-calcined product was covered with a mixture of the same composition, and the covered portion was removed after the calcination. It was found by ICP analysis that vaporization of Li had not occurred in the composite oxide obtained by synthesis using this method.

Next, to improve the crystallinity of the orthorhombic composite oxide, annealing and rapid cooling were performed. More specifically, the composite oxide was annealed in the muffle furnace at 850°C for 6 hours. After that, the composite oxide was taken out from the furnace and put in liquid nitrogen for rapid cooling. The composite oxide of Example 1 was thus obtained.

The obtained composite oxide of Example 1 was packed into a standard glass holder with a diameter of 25 mm, and powder X-ray diffraction was performed by the above-described method. As shown in Table 5, it was found from the measurement result that the composite oxide of Example 1 was a titanium-containing composite oxide having an orthorhombic phase and a crystal structure belonging to the space group Fmmm. It was also found by the ICP analysis that the composite oxide had a composition represented by the general formula Li₂Na₂Ti₆O₁₄.

The pH of the composite oxide of Example 1 was obtained by the above-described method. Table 5 shows the value of the pH.

### <Obtaining a Composite with Carbon Coating Layer>

Next, the obtained composite oxide powder was made into a composite with a carbon material. More specifically, polyvinyl alcohol (PVA) with a saponification degree of 80%, which served as a carbon-containing compound, was mixed in pure water to prepare a 15-mass% aqueous solution of PVA. The powder of the composite oxide was mixed in the aqueous solution, and the mixture was stirred to prepare a dispersion. The mass ratio of the composite oxide particles to PVA in the dispersion was 15 mass%. An aqueous ammonia solution was added to the dispersion such that the pH of the dispersion was adjusted to be within the range of from 11.5 to 12.4.

The thus obtained dispersion (pure water) containing a composite, having a phase of PVA before carbonization formed on at least a part of the surface of a composite oxide particle, was subjected to spray-drying. After that, the obtained powder was recovered, and drying was performed at 100°C for 12 hours to sufficiently eliminate the solvent. Then, carbonization calcination was performed under a reducing atmosphere.

First, the sample was heated at 500°C for 30 min in a nitrogen flow atmosphere using a tube furnace as preheating for dehydration, and then cooled down to room temperature. Next, the sample was transferred into a glass tube. The glass tube was evacuated, and nitrogen was then sealed therein. A carbonization heat treatment was performed at 550°C for 1 hour in the closed nitrogen atmosphere. It was confirmed that a tar-like viscous liquid adhered to the glass tube. The sample was cooled down to room temperature, thereby completing the carbonization process and obtaining an active material including a carbon coating layer.

Next, the agglomeration of the obtained active material was lightly resolved using a mortar. For the resolved active material, the particle size was measured using a laser diffraction type grain size distribution measuring device. The average particle size (d50) calculated at a cumulative frequency of 50% was 3.5 µm. The thus obtained active material was used as an evaluation active material of Example 1.

In addition, for the obtained active material, the state of the carbon coating was observed by TEM observation. First, metallic Ru was adsorbed onto the active material surface by deposition. After that, the sample powder was embedded in resin, and a thin film was obtained by ion milling using Dual Mill 600 manufactured by GATAN. Using the thus processed sample, TEM observation was performed for an arbitrary primary particle. As the TEM device, H-9000UHR III manufactured by Hitachi was used, and evaluation was performed by setting an acceleration voltage to 300 kv and an image magnification to 2,000,000 times.

In the sample active material, a portion observed between the composite oxide particle and the deposited Ru coat can be determined as being a carbon coating layer. The thickness of the carbon coating layer according to Example 1 was about 2.9 nm. The smoothness was high, and an even coating was formed.

For the obtained active material, a BET specific surface area S was measured by a nitrogen adsorption method. In Example 1, it had been found that S = 3.1 (m²/g). When the coat weight ratio M of the carbon coating layer with respect to the total mass of the active material was obtained by the above-described heating method, it had been found that M = 2.3 mass%. The pH of the evaluation active material including the carbon coating layer obtained by the above-described method was 10.6.

### <Measurement of Carboxyl Group in Carbon Coating Layer>

The carboxyl group concentration ([COOH]/Cₜₒₜₐₗ x 100%) for the evaluation active material according to Example 1 was obtained by the above-described method. As shown in Table 7, the carboxyl group concentration was 0.09% in Example 1.

The amount of carboxyl group that has neutralized Na on the surface of the active material was investigated by XPS measurement and TOF-SIMS (Time Of Flight-Secondary Ion Mass Spectrometry) measurement. As can be seen from the quantification result obtained by peak fitting of C1s in XPS measurement, the concentration ([COONa] /Cₜₒₜₐₗ x 100%) of the carboxyl group that has neutralized Na mostly matched the concentration of carboxyl group obtained by XPS.

### (Examples 2 to 9)

In each of Examples 2 to 9, first, a lithium titanium composite oxide represented by Li₂Na_{1.5}Ti_{5.5}Nb_{0.5}O₁₄ and belonging to the space group Fmmm was synthesized and used as an orthorhombic titanium-containing composite oxide phase in an active material. Table 3 shows raw materials used to synthesize the composite oxide and the mixing ratio of the raw materials. Additionally, as shown in Table 5, a composite oxide was synthesized according to the same procedure as that in Example 1.

In each of Examples 2 to 9, in order to investigate a difference caused by PVA raw materials of different saponification degrees and the carbonation conditions, an evaluation active material was obtained using PVA of the saponification degree and the carbonization condition shown in Table 6.

Table 7 shows the results of the various analyses performed as in Example 1 for the thus obtained evaluation active materials.

### (Examples 10 to 28)

In each of Examples 10 to 28, first, a lithium titanium composite oxide having a composition represented by the general formula Li₂₊ₐM1_{2-b}Ti_{6-c}M2_{d}O_{14+δ} and including various kinds of elements M1 and M2 shown in Table 2 was synthesized and used as an orthorhombic titanium-containing composite oxide phase. Tables 3 and 4 show raw materials used to synthesize the lithium titanium composite oxide and the mixing ratio of the raw materials. Additionally, Table 5 shows the synthesis conditions of each lithium titanium composite oxide.

Next, a carbon coating process was performed for each obtained lithium titanium composite oxide using PVA of the saponification degree and the carbonization condition shown in Table 6, thereby obtaining an evaluation active material.

Table 7 shows the results of the various analyses performed as in Example 1 for the thus obtained evaluation active materials.

### (Example 29)

In Example 29, first, a composite oxide was synthesized as in Example 1. Next, prior to the carbon coating process, the sample was heated to 800°C for 1 hour in a reducing atmosphere, flowing nitrogen gas containing 3% hydrogen, to thereby reduce a part of the oxide ions, and thus, obtained was a composite oxide having a composition shown in Table 2.

Next, a carbon coating process was performed for the composite oxide using PVA of the saponification degree and the carbonization condition shown in Table 6, thereby obtaining an evaluation active material.

Table 7 shows the results of the various analyses performed as in Example 1 for the thus obtained evaluation active material.

### (Example 30)

In Example 30, an after treatment described below was performed for the carbon-coated evaluation active material obtained in Example 1, thereby synthesizing an evaluation active material of Example 30. Lithium carbonate was mixed with the evaluation active material of Example 1 at a raw material ratio shown in Table 5, thereby obtaining a mixture in which the mole ratio between the evaluation active material of Example 1 and lithium carbonate was 4 : 1. The mixture was calcined at 600°C for 3 hours under a flow of nitrogen. By this procedure, the composition of the composite oxide phase in the evaluation active material was set to the composition shown in Table 2.

Table 7 shows the results of the various analyses performed as in Example 1 for the thus obtained evaluation active material.

### (Comparative Example 1)

First, a titanium-containing composite oxide represented by the general formula Li₂Na₂Ti₆O₁₄ was synthesized according to the same procedure as that in Example 1.

Next, the obtained composite oxide powder of Li₂Na₂Ti₆O₁₄ was made into a composite with a carbon material. More specifically, polyvinyl alcohol (PVA) with a saponification degree of 95%, which served as a carbon-containing compound, was mixed in pure water to prepare a 15-mass% aqueous solution of PVA. The composite oxide powder was mixed in the aqueous solution, and the mixture was stirred to prepare a dispersion. The mass ratio of the composite oxide particles to PVA in the dispersion was 15 mass%. In this way, a dispersion was obtained in which a composite where PVA as a carbon source has adsorbed onto at least a part of the surface of a Li₂Na₂Ti₆O₁₄ particle as a composite oxide particle was dispersed. Next, the dispersion in which the composite was dispersed was subjected to spray-drying.

After that, the obtained powder was recovered, and drying was performed at 100°C for 12 hours to sufficiently eliminate the solvent. Then, carbonization calcination was performed under a reducing atmosphere. The calcination was performed at 700°C for 1 hour under an inert atmosphere.

Next, 10 g of the active material including the carbon coating layer was immersed in 100 mL of a solution of acetic acid at 0.1 mol/L and stirred. After that, filtration was performed. The active material was immersed in 1 L of pure water, and thus washed with water. Subsequently, vacuum drying was performed at 140°C for 6 hours.

Next, the agglomeration of the obtained active material was lightly resolved using a mortar. For the resolved active material, the particle size was measured using a laser diffraction type grain size distribution measuring device. The average particle size (d50) calculated at a cumulative frequency of 50% was 3.5 pm. The thus obtained active material was used as an evaluation active material of Comparative Example 1.

### (Comparative Example 2)

In Comparative Example 2, 10 g of the evaluation active material including a carbon coating layer that was obtained in Comparative Example 1 was immersed in 100 mL of a solution of acetic acid at 0.1 mol/L and stirred. After that, the evaluation active material was immersed in 1 L of pure water, and thus washed with water. Subsequently, vacuum drying was performed at 140°C for 6 hours. In this manner, the evaluation active material was obtained according to the same procedure as that in Comparative Example 1 except that the pH was adjusted by immersing the evaluation active material after carbon coating in the solution of acetic acid again.

### (Comparative Example 3)

In Comparative Example 3, an evaluation active material was obtained according to the same procedure as that in Comparative Example 1 except that after the dispersion of the composite between the composite oxide particles and PVA was subjected to spray-drying, the carbonization process under the reducing atmosphere was not performed.

### (Comparative Example 4)

A powder of titanium-containing composite oxide represented by the general formula Li₂SrTi₆O₁₄, which was prepared as in Example 12, was made into a composite with a carbon material as in Comparative Example 1, thereby obtaining the evaluation active material of Comparative Example 4.

### (Comparative Example 5)

With regard to a powder of lithium titanium composite oxide represented by the general formula Li₂Na_{1.5}Ti_{5.5}Nb_{0.5}O₁₄, which was prepared as in Example 2, a dispersion, in which a composite having PVA adsorbed on the surface was dispersed, was subjected to spray-drying. After that, drying was performed at 100°C for 12 hours to sufficiently eliminate the solvent. The subjecting of the dispersion to spray-drying and the subsequent drying were performed in the same manner as in Comparative Example 1, thereby obtaining the evaluation active material of Comparative Example 5. Namely, in Comparative Example 5, the carbonization process under the reducing atmosphere was not performed.

The various analyses were performed as in Example 1, for the evaluation active materials obtained in Comparative Examples 1 to 5.

Table 2 shows the compositions (Li₂₊ₐM_{12-b}Ti_{6-c}M2ₐO_{14+δ}) of the synthesized composite oxides, that is, the titanium-containing composite oxide phases included in the evaluation active materials in Examples 1 to 30 and Comparative Examples 1 to 5.

**[Table 2]**

| | Composition of Titanium-containing composite oxide phase | a | b | c | d | δ |
|---|---|---|---|---|---|---|
| Comparative Example 1 | Li₂Na₂Ti₆O₁₄ | 0 | 0 | 0 | 0 | 0 |
| Comparative Example 2 | Li₂Na₂Ti₆O₁₄ | 0 | 0 | 0 | 0 | 0 |
| Comparative Example 3 | Li₂Na₂Ti₆O₁₄ | 0 | 0 | 0 | 0 | 0 |
| Comparative Example 4 | Li₂SrTi₆O₁₄ | 0 | 1.0 | 0 | 0 | 0 |
| Comparative Example 5 | Li₂Na_{1.2}Ti_{5.5}Nb_{0.5}O₁₄ | 0 | 0.5 | 0.5 | 0.5 | 0 |
| Example 1 | Li₂Na₂Ti₆O₁₄ | 0 | 0 | 0 | 0 | 0 |
| Example 2 | Li₂Na_{1.5}Ti_{5.5}Nb_{0.5}O₁₄ | 0 | 0.5 | 0.5 | 0.5 | 0 |
| Example 3 | Li₂Na_{1.5}Ti_{5.5}Nb_{0.5}O₁₄ | 0 | 0.5 | 0.5 | 0.5 | 0 |
| Example 4 | Li₂Na_{1.5}Ti_{5.5}Nb_{0.5}O₁₄ | 0 | 0.5 | 0.5 | 0.5 | 0 |
| Example 5 | Li₂Na_{1.5}Ti_{5.5}Nb_{0.5}O₁₄ | 0 | 0.5 | 0.5 | 0.5 | 0 |
| Example 6 | Li₂Na_{1.5}Ti_{5.5}Nb_{0.5}O₁₄ | 0 | 0.5 | 0.5 | 0.5 | 0 |
| Example 7 | Li₂Na_{1.5}Ti_{5.5}Nb_{0.5}O₁₄ | 0 | 0.5 | 0.5 | 0.5 | 0 |
| Example 8 | Li₂Na_{1.5}Ti_{5.5}Nb_{0.5}O₁₄ | 0 | 0.5 | 0.5 | 0.5 | 0 |
| Example 9 | Li₂Na_{1.5}Ti_{5.5}Nb_{0.5}O₁₄ | 0 | 0.5 | 0.5 | 0.5 | 0 |
| Example 10 | Li₂NaTi₅NbO₁₄ | 0 | 1.0 | 1.0 | 1.0 | 0 |
| Example 11 | Li₂Na_{0.1}Ti_{4.1}Nb_{1.9}O₁₄ | 0 | 1.9 | 1.9 | 1.9 | 0 |
| Example 12 | Li₂SrTi₆O₁₄ | 0 | 1.0 | 0 | 0 | 0 |
| Example 13 | Li₂(Ba_{0.6}Ca_{0.3}Mg_{0.1})Ti₆O₁₄ | 0 | 1.0 | 0 | 0 | 0 |
| Example 14 | Li₂Sr_{0.25}Na_{0.25}Ti_{5.25}Nb_{0.75}O₁₄ | 0 | 1.0 | 0.75 | 0.75 | 0 |
| Example 15 | Li₂Na_{1.5}Ti₅(Y_{0.25}Nb_{0.75})O₁₄ | 0 | 0.5 | 1.0 | 1.0 | 0 |
| Example 16 | Li₂Na_{1.5}Ti₅(Fe_{0.25}Nb_{0.75})O₁₄ | 0 | 0.5 | 1.0 | 1.0 | 0 |
| Example 17 | Li₂Na_{1.5}Ti₅(CO_{0.25}Nb_{0.75})O₁₄ | 0 | 0.5 | 1.0 | 1.0 | 0 |
| Example 18 | Li₂Na_{1.5}Ti₅(Cr_{0.25}Nb_{0.75})O₁₄ | 0 | 0.5 | 1.0 | 1.0 | 0 |
| Example 19 | Li₂Na_{1.5}Ti₅(Mn_{0.25}Nb_{0.75})O₁₄ | 0 | 0.5 | 1.0 | 1.0 | 0 |
| Example 20 | Li₂Na_{1.5}Ti₅(Ni_{0.25}Nb_{0.75})O₁₄ | 0 | 0.5 | 1.0 | 1.0 | 0 |
| Example 21 | Li₂Na_{1.5}Ti₅(Al_{0.25}Nb_{0.75})O₁₄ | 0 | 0.5 | 1.5 | 1.5 | 0 |
| Example 22 | Li₂Na_{1.5}Ti_{4.5}(Y_{0.25}Nb_{0.75}Zr_{0.5})O₁₄ | 0 | 0.5 | 1.5 | 1.5 | 0 |
| Example 23 | Li₂Na_{1.5}Ti_{4.5}(Y_{0.25}Nb_{0.75}Sn_{0.5})O₁₄ | 0 | 0.5 | 1.0 | 1.0 | 0 |
| Example 24 | Li₂Na_{1.5}Ti₅(Y_{0.25}Nb_{0.65}V_{0.1})O₁₄ | 0 | 0.5 | 1.0 | 1.0 | 0 |
| Example 25 | Li₂Na_{1.5}Ti₅(Y_{0.25}Nb_{0.65}Ta_{0.1})O₁₄ | 0 | 0.5 | 1.0 | 1.0 | 0 |
| Example 26 | Li₂Na_{1.4}Ti₅(Y_{0.25}Nb_{0.65}Mo_{0.1})O₁₄ | 0 | 0.6 | 1.0 | 1.0 | 0 |
| Example 27 | Li₂Na_{1.4}Ti₅(Y_{0.25}Nb_{0.65}W_{0.1})O₁₄ | 0 | 0.6 | 1.0 | 1.0 | 0 |
| Example 28 | Li₂Na_{1.7}K_{0.1}Cs_{0.1}Rb_{0.1}Ti_{0.1}Zr_{5.9}O₁₄ | 0 | 0 | 5.9 | 5.9 | 0 |
| Example 29 | Li₂Na₂Ti₆O₁₃ | 0 | 0 | 0 | 0 | -0.5 |
| Example 30 | Li₆Na₂Ti₆O₁₄ | 6 | 0 | 0 | 0 | 0 |

Table 3 shows the raw materials used to synthesize the composite oxides and the mixing ratios (mole fractions) thereof in Examples 1 to 14 and Comparative Examples 1 to 5.

**[Table 3]**

| | Li source / amount | M1 source / amount | Ti source / amount | M2 source / amount |
|---|---|---|---|---|
| Comparative Example 1 | Li₂CO₃ / 1.0 | Na₂CO₃ / 1.0 | TiO₂ / 6.0 | - |
| Comparative Example 2 | Li₂CO₃ / 1.0 | Na₂CO₃ / 1.0 | TiO₂ / 6.0 | - |
| Comparative Example 3 | Li₂CO₃ / 1.0 | Na₂CO₃ / 1.0 | TiO₂ / 6.0 | - |
| Comparative Example 4 | Li₂CO₃ / 1.0 | SrCO₃ / 1.0 | TiO₂ / 6.0 | - |
| Comparative Example 5 | Li₂CO₃ / 1.0 | Na₂CO₃ / 0.75 | TiO₂ / 5.5 | Nb₂O₅ / 0.25 |
| Example 1 | Li₂CO₃ / 1.0 | SrCO₃ / 1.0 | TiO₂ / 6.0 | - |
| Example 2 | Li₂CO₃ / 1.0 | Na₂CO₃ / 0.75 | TiO₂ / 5.5 | Nb₂O₅ / 0.25 |
| Example 3 | Li₂CO₃ / 1.0 | Na₂CO₃ / 0.75 | TiO₂ / 5.5 | Nb₂O₅ / 0.25 |
| Example 4 | Li₂CO₃ / 1.0 | Na₂CO₃ / 0.75 | TiO₂ / 5.5 | Nb₂O₅ / 0.25 |
| Example 5 | Li₂CO₃ / 1.0 | Na₂CO₃ / 0.75 | TiO₂ / 5.5 | Nb₂O₅ / 0.25 |
| Example 6 | Li₂CO₃ / 1.0 | Na₂CO₃ / 0.75 | TiO₂ / 5.5 | Nb₂O₅ / 0.25 |
| Example 7 | Li₂CO₃ / 1.0 | Na₂CO₃ / 0.75 | TiO₂ / 5.5 | Nb₂O₅ / 0.25 |
| Example 8 | Li₂CO₃ / 1.0 | Na₂CO₃ / 0.75 | TiO₂ / 5.5 | Nb₂O₅ / 0.25 |
| Example 9 | Li₂CO₃ / 1.0 | Na₂CO₃ / 0.75 | TiO₂ / 5.5 | Nb₂O₅ / 0.25 |
| Example 10 | Li₂CO₃ / 1.0 | Na₂CO₃ / 0.5 | TiO₂ / 5.0 | Nb₂O₅ / 0.5 |
| Example 11 | Li₂CO₃ / 1.0 | Na₂CO₃ / 0.05 | TiO₂ / 4.1 | Nb₂O₅ / 0.95 |
| Example 12 | Li₂CO₃ / 1.0 | SrCO₃ / 1.0 | TiO₂ / 6.0 | - |
| Example 13 | Li₂CO₃ / 1.0 | BaCO₃ / 0.6 CaCO₃ / 0.3 MgO / 0.1 | TiO₂ / 6.0 | - |
| Example 14 | Li₂CO₃ / 1.0 | SrCO₃ / 0.25 Na₂CO₃ / 0.375 | TiO₂ / 5.25 | Nb₂O₅ / 0.375 |

Table 4 shows the raw materials used to synthesize the composite oxides and the mixing ratios thereof in Examples 15 to 30. Table 4 also shows the raw material (lithium carbonate) used in the after treatment in Example 30 and the mixing ratio (mole fraction) thereof.

**[Table 4]**

| | Li source / amount | M1 source / amount | Ti source / amount | M2 source / amount |
|---|---|---|---|---|
| Example 15 | Li₂CO₃ / 1.0 | Na₂CO₃ / 0.75 | TiO₂ / 5.0 | Nb₂O₅ / 0.375 |
| | | | | Y₂O₃ / 0.125 |
| Example 16 | Li₂CO₃ / 1.0 | Na₂CO₃ / 0.75 | TiO₂ / 5.0 | Nb₂O₅ / 0.375 |
| | | | | Fe₂O3 / 0.12 |
| Example 17 | Li₂CO₃ / 1.0 | Na₂CO₃ / 0.75 | TiO₂ / 5.0 | Nb₂O₅ / 0.375 |
| | | | | Co₂O₃ 0.125 |
| Example 18 | Li₂CO₃ / 1.0 | Na₂CO₃ / 0.75 | TiO₂ / 5.0 | Nb₂O₅ / 0.375 |
| | | | | Cr₂O₃ / 0.125 |
| Example 19 | Li₂CO₃ / 1.0 | Na₂CO₃ / 0.75 | TiO₂ / 5.0 | Nb₂O₅ / 0.375 |
| | | | | Mn₂O₃ / 0.125 |
| Example 20 | Li₂CO₃ / 1.0 | Na₂CO₃ / 0.75 | TiO₂ / 5.0 | Nb₂O₅ / 0.375 |
| | | | | NiO / 0.25 |
| Example 21 | Li₂CO₃ / 1.0 | Na₂CO₃ / 0.75 | TiO₂ / 5.0 | Nb₂O₅ / 0.375 |
| | | | | Al₂O₃ / 0.125 |
| Example 22 | Li₂CO₃ / 1.0 | Na₂CO₃ / 0.75 | TiO₂ / 4.5 | Nb₂O₅ / 0.375 |
| | | | | Y₂O₃ / 0.125 |
| | | | | ZrO₂ / 0.5 |
| Example 23 | Li₂CO₃ / 1.0 | Na₂CO₃ / 0.75 | TiO₂ / 4.5 | Nb₂O₅ / 0.375 |
| | | | | Y₂O₃ / 0.125 |
| | | | | SnO₂ / 0.5 |
| Example 24 | Li₂CO₃ / 1.0 | Na₂CO₃ / 0.75 | TiO₂ / 5.0 | Nb₂O₅ / 0.325 |
| | | | | Y₂O₃ / 0.125 |
| | | | | V₂O₅ / 0.05 |
| Example 25 | Li₂CO₃ / 1.0 | Na₂CO₃ / 0.75 | TiO₂ / 5.0 | Nb₂O₅ / 0.325 |
| | | | | Y₂O₃ / 0.125 |
| | | | | Ta₂O₅ / 0.05 |
| Example 26 | Li₂CO₃ / 1.0 | Na₂CO₃ / 0.7 | TiO₂ / 5.0 | Nb₂O₅ / 0.325 |
| | | | | Y₂O₃ / 0.125 |
| | | | | MoO₃ / 0.1 |
| Example 27 | Li₂CO₃ / 1.0 | Na₂CO₃ / 0.7 | TiO₂ / 5.0 | Nb₂O₅ / 0.325 |
| | | | | Y₂O₃ / 0.125 |
| | | | | WO₃ / 0.1 |
| Example 28 | Li₂CO₃ / 1.0 | Na₂CO₃ / 0.85 | TiO₂ / 0.1 | ZrO₂ / 5.9 |
| | | K₂CO₃ / 0.05 | | |
| | | Cs₂CO₃ / 0.05 | | |
| | | Rb₂CO₃/0.05 | | |
| Example 29 | Li₂CO₃ / 1.0 | Na₂CO₃ / 1.0 | TiO₂ / 6.0 | - |
| Example 30 | Li₂CO₃ / 1.0 | Na₂CO₃ / 1.0 At | TiO₂ / 6.0 | - |
| | At after treatment: | after treatment: | At after treatment: | |
| | Li₂CO₃ / 2.0 | - | - | |

Table 5 shows the crystal phases of the phases of composite oxides obtained in Examples 1 to 30 and Comparative Examples 1 to 5, the space groups to which the crystal structures belong, and the pHs. The conditions of calcination in synthesizing the composite oxides are also shown. Table 5 also shows the calcination conditions in the after treatment in Example 30.

**[Table 5]**

| | Crystal phase of phase of composite oxide | Space group of phase of composite oxide | pH of phase of composite oxide | Calcining temperature (°C) | Calcining time (h) |
|---|---|---|---|---|---|
| Comparative Example 1 | orthorhombic | Fmmm | 11.5 | 900 | 12 |
| Comparative Example 2 | orthorhombic | Fmmm | 11.5 | 900 | 12 |
| Comparative Example 3 | orthorhombic | Fmmm | 11.5 | 900 | 12 |
| Comparative Example 4 | orthorhombic | Cmca | 11.3 | 900 | 12 |
| Comparative Example 5 | orthorhombic | Fmmm | 11.6 | 900 | 12 |
| Example 1 | orthorhombic | Fmmm | 11.6 | 900 | 12 |
| Example 2 | orthorhombic | Fmmm | 11.3 | 900 | 12 |
| Example 3 | orthorhombic | Fmmm | 11.3 | 900 | 12 |
| Example 4 | orthorhombic | Fmmm | 11.3 | 900 | 12 |
| Example 5 | orthorhombic | Fmmm | 11.3 | 900 | 12 |
| Example 6 | orthorhombic | Fmmm | 11.3 | 900 | 12 |
| Example 7 | orthorhombic | Fmmm | 11.3 | 900 | 12 |
| Example 8 | orthorhombic | Fmmm | 11.3 | 900 | 12 |
| Example 9 | orthorhombic | Fmmm | 11.3 | 900 | 12 |
| Example 10 | orthorhombic | Fmmm | 11.0 | 900 | 12 |
| Example 11 | orthorhombic | Fmmm | 10.5 | 900 | 12 |
| Example 12 | orthorhombic | Cmca | 10.8 | 900 | 12 |
| Example 13 | orthorhombic | Cmca | 11.1 | 900 | 12 |
| Example 14 | orthorhombic | Fmmm + Cmca | 11.4 | 900 | 12 |
| Example 15 | orthorhombic | Fmmm | 11.3 | 900 | 12 |
| Example 16 | orthorhombic | Fmmm | 11.5 | 900 | 12 |
| Example 17 | orthorhombic | Fmmm | 11.1 | 900 | 12 |
| Example 18 | orthorhombic | Fmmm | 11.4 | 900 | 12 |
| Example 19 | orthorhombic | Fmmm | 11.5 | 900 | 12 |
| Example 20 | orthorhombic | Fmmm | 11.7 | 900 | 12 |
| Example 21 | orthorhombic | Fmmm | 11.3 | 900 | 12 |
| Example 22 | orthorhombic | Fmmm | 11.2 | 900 | 12 |
| Example 23 | orthorhombic | Fmmm | 11.6 | 900 | 12 |
| Example 24 | orthorhombic | Fmmm | 11.1 | 900 | 12 |
| Example 25 | orthorhombic | Fmmm | 11.3 | 900 | 12 |
| Example 26 | orthorhombic | Fmmm | 11.4 | 900 | 12 |
| Example 27 | orthorhombic | Fmmm | 11.2 | 900 | 12 |
| Example 28 | orthorhombic | Fmmm | 11.6 | 900 | 12 |
| Example 29 | orthorhombic | Fmmm | 11.5 | 900 | 12 |
| Example 30 | orthorhombic | Fmmm | 11.4 | 900 At after treatment: 600 | 12 At after treatment: 3 |

Table 6 shows the saponification degrees of PVA used in the carbon coating process for the composite oxides and the carbonization conditions in Examples 1 to 30 and Comparative Examples 1 to 5.

**[Table 6]**

| | Saponification degree | Carbonization condition Temperature, Time |
|---|---|---|
| Comparative Example 1 | 95 | 700°C, 1h |
| Comparative Example 2 | 95 | 700°C, 1h |
| Comparative Example 3 | 95 | - |
| Comparative Example 4 | 95 | 700°C, 1h |
| Comparative Example 5 | 95 | - |
| Example 1 | 80 | 550°C, 1h |
| Example 2 | 80 | 550°C, 1h |
| Example 3 | 80 | 650°C, 1h |
| Example 4 | 75 | 400°C, 1h |
| Example 5 | 75 | 500°C, 1h |
| Example 6 | 75 | 600°C, 1h |
| Example 7 | 75 | 700°C, 1h |
| Example 8 | 70 | 600°C, 1h |
| Example 9 | 70 | 700°C, 1h |
| Example 10 | 75 | 600°C, 1h |
| Example 11 | 75 | 600°C, 1h |
| Example 12 | 75 | 600°C, 1h |
| Example 13 | 75 | 600°C, 1h |
| Example 14 | 75 | 600°C, 1h |
| Example 15 | 75 | 600°C, 1h |
| Example 16 | 75 | 600°C, 1h |
| Example 17 | 75 | 600°C, 1h |
| Example 18 | 75 | 600°C, 1h |
| Example 19 | 75 | 600°C, 1h |
| Example 20 | 75 | 600°C, 1h |
| Example 21 | 75 | 600°C, 1h |
| Example 22 | 75 | 600°C, 1h |
| Example 23 | 75 | 600°C, 1h |
| Example 24 | 75 | 600°C, 1h |
| Example 25 | 75 | 600°C, 1h |
| Example 26 | 75 | 600°C, 1h |
| Example 27 | 75 | 600°C, 1h |
| Example 28 | 75 | 600°C, 1h |
| Example 29 | 75 | 600°C, 1h |
| Example 30 | 75 | 600°C, 1h |

Table 7 shows the carboxyl group concentrations, the carbon coating weight ratios M, the thicknesses of carbon coating layers, the pHs of the active material particles, and BET specific surface areas S obtained for the evaluation active materials obtained in Examples 1 to 30 and Comparative Examples 1 to 5.

**[Table 7]**

| | Carboxyl group concentration (%) | Carbon-coat weight ratio (wt%) | Thickness of carbon coating layer (nm) | pH of active material particle | BET specific surface area (m²/g) |
|---|---|---|---|---|---|
| Comparative Example 1 | 0.00 | 2.3 | 2.8 | 11.2 | 3.1 |
| Comparative Example 2 | 0.00 | 2.2 | 2.6 | 11.1 | 3.0 |
| Comparative Example 3 | - | - | - | 11.4 | 2.7 |
| Comparative Example 4 | 0.00 | 2.2 | 2.7 | 11.1 | 3.0 |
| Comparative Example 5 | - | - | - | 11.0 | 3.3 |
| Example 1 | 0.09 | 2.3 | 2.9 | 10.6 | 3.1 |
| Example 2 | 0.10 | 2.2 | 2.7 | 10.2 | 3.3 |
| Example 3 | 0.01 | 2.1 | 2.6 | 10.9 | 2.9 |
| Example 4 | 4.89 | 3.6 | 3.7 | 9.3 | 8.1 |
| Example 5 | 2.35 | 2.8 | 3.0 | 10.0 | 5.6 |
| Example 6 | 1.02 | 2.2 | 2.7 | 10.2 | 3.2 |
| Example 7 | 0.35 | 1.9 | 2.8 | 10.6 | 3.0 |
| Example 8 | 2.43 | 2.2 | 2.6 | 10.1 | 4.8 |
| Example 9 | 0.55 | 2.0 | 2.7 | 10.3 | 3.3 |
| Example 10 | 0.99 | 2.1 | 2.7 | 10.1 | 3.0 |
| Example 11 | 1.03 | 2.0 | 2.6 | 10.0 | 3.1 |
| Example 12 | 1.01 | 1.9 | 2.8 | 10.2 | 3.1 |
| Example 13 | 0.99 | 1.9 | 2.8 | 10.1 | 3.3 |
| Example 14 | 0.98 | 2.0 | 2.7 | 10.3 | 3.0 |
| Example 15 | 1.02 | 2.1 | 2.6 | 10.1 | 2.9 |
| Example 16 | 1.00 | 2.0 | 2.6 | 10.1 | 3.1 |
| Example 17 | 0.99 | 2.1 | 2.6 | 10.2 | 3.0 |
| Example 18 | 1.04 | 1.9 | 2.7 | 10.4 | 3.2 |
| Example 19 | 1.01 | 2.2 | 2.8 | 10.1 | 3.3 |
| Example 20 | 1.03 | 1.9 | 2.6 | 10.3 | 3.2 |
| Example 21 | 1.00 | 2.0 | 2.7 | 10.1 | 3.1 |
| Example 22 | 0.98 | 2.0 | 2.7 | 10.2 | 2.9 |
| Example 23 | 0.96 | 2.1 | 2.8 | 10.4 | 3.0 |
| Example 24 | 1.02 | 2.1 | 2.7 | 10.5 | 3.2 |
| Example 25 | 1.01 | 2.2 | 2.7 | 10.2 | 3.1 |
| Example 26 | 0.97 | 2.1 | 2.6 | 10.3 | 3.0 |
| Example 27 | 0.99 | 2.0 | 2.6 | 10.1 | 2.9 |
| Example 28 | 1.00 | 1.9 | 2.7 | 10.5 | 3.0 |
| Example 29 | 1.02 | 2.0 | 2.8 | 10.4 | 3.2 |
| Example 30 | 0.15 | 0.5 | 0.2 | 10.9 | 0.9 |

For the evaluation active materials obtained in Examples 1 to 30 and Comparative Examples 1 to 5, electrochemical performance was evaluated in the following manner.

### <Production of Electrode>

For each of the examples and comparative examples, the evaluation active material, acetylene black as an electroconductive agent, and polyvinylidene fluoride (PVdF) as a binder were added to N-methylpyrrolidone (NMP), and mixed to prepare a slurry. At this time, the mass ratio of evaluation active material : acetylene black : PVdF was 90 : 5 : 5. The slurry was applied to both of reverse surfaces of a current collector made of an aluminum foil having a thickness of 12 µm, and dried. Thereafter, by subjecting to pressing, electrodes each having an electrode density (not including current collector) of 2.2 g/cm³ were obtained.

### <Preparation of Liquid Nonaqueous Electrolyte>

Ethylene carbonate (EC) and diethyl carbonate (DEC) were mixed at a volume ratio of 1:2, thereby obtaining a mixed solvent. LiPF₆ as an electrolyte salt was dissolved in the mixed solvent at a concentration of 1 M, thereby obtaining a liquid nonaqueous electrolyte.

### <Production of Beaker Cell>

A beaker cell using the previously produced electrode as a working electrode and metallic lithium as a counter electrode and a reference electrode was produced. The above-described liquid nonaqueous electrolyte was put into the beaker cell, thereby completing beaker cells for each of the examples and comparative examples.

### <Measurement of Battery Performance>

For each obtained beaker cell, lithium insertion into the evaluation active material was performed under a constant current-constant voltage condition of 0.2 C and 1 V for 10 hours under a 25°C environment. Next, lithium extraction from the evaluation active material was performed until the cell voltage reached 3 V at a constant current of 0.2 C. At this time, a coulomb efficiency obtained by dividing the coulomb amount (current amount) in the first lithium extraction by the coulomb amount (current amount) in the first lithium insertion was defined as an initial charge-and-discharge efficiency (%).

Next, charge and discharge were performed under the same conditions. The amount of lithium extraction performed until the cell voltage reached 3 V at a constant current of 0.2 C in the second charge-and-discharge cycle was defined as a 0.2-C discharge capacity. Next, lithium insertion was performed under a constant current-constant voltage condition of 0.2 C and 1 V for 10 hours, and after that, lithium extraction was performed until the cell voltage reached 3 V at a constant current of 10 C. The amount of lithium extraction at this time was defined as a 10-C discharge capacity. Table 8 shows a value obtained by dividing the 0.2-C discharge capacity by the 10-C discharge capacity, that is, a 10-C/0.2-C discharge capacity ratio for each of Examples 1 to 30 and Comparative Examples 1 to 5.

Next, the charge-and-discharge cycle was repeated 50 times under 45°C and 60°C environments. Here, lithium insertion (charge) was performed at a constant current of 0.2 C until the voltage became 1 V. After that, lithium extraction (discharge) was performed until the cell voltage reached 3 V at a constant current of 10 C. The charge and discharge were defined as one charge-and-discharge cycle. When performing the 50th charge-and-discharge cycle, the discharge capacity was obtained.

For each of Examples 1 to 30 and Comparative Examples 1 to 5, a capacity retention ratio (= discharge capacity in 50th cycle/initial discharge capacity x 100 [%]) serving as an index of life performance of the battery active material is shown in Table 8.

**[Table 8]**

| | Initial discharge capacity (mAh/g) | Initial coulomb efficiency (%) | 10-C/0.2-C discharge capacity ratio | 45°C 50 cycle capacity retention ratio (%) | 60^{.}C 50 cycle capacity retention ratio (%) |
|---|---|---|---|---|---|
| Comparative Example 1 | 91.0 | 92.0 | 89.9 | 72.1 | 23.5 |
| Comparative Example 2 | 90.8 | 91.7 | 89.3 | 69.1 | 20.8 |
| Comparative Example 3 | 89.4 | 91.3 | 88.5 | 50.1 | 7.1 |
| Comparative Example 4 | 106.5 | 92.2 | 89.2 | 70.3 | 19.6 |
| Comparative Example 5 | 131.2 | 93.0 | 91.8 | 75.6 | 32.2 |
| Example 1 | 91.2 | 92.2 | 90.3 | 73.5 | 36.8 |
| Example 2 | 133.0 | 93.3 | 92.6 | 80.2 | 45.6 |
| Example 3 | 132.5 | 93.5 | 92.2 | 78.7 | 40.3 |
| Example 4 | 132.3 | 93.2 | 92.5 | 81.3 | 56 |
| Example 5 | 133.2 | 93.4 | 93.9 | 82.3 | 60.4 |
| Example 6 | 132.7 | 93.1 | 94.5 | 85.4 | 63.2 |
| Example 7 | 134.4 | 94.3 | 94.2 | 84.9 | 59.1 |
| Example 8 | 132.9 | 93.6 | 94.0 | 83.1 | 58.8 |
| Example 9 | 134.5 | 94.2 | 94.6 | 85.3 | 60.9 |
| Example 10 | 129.3 | 94.0 | 93.4 | 80.3 | 52.2 |
| Example 11 | 115.3 | 93.7 | 93.0 | 81.5 | 54.1 |
| Example 12 | 107.0 | 93.8 | 92 | 84.6 | 49.0 |
| Example 13 | 102.4 | 93.5 | 92.5 | 84.6 82.6 | 49.0 47.9 |
| Example 14 | 110.2 | 93.4 | 92.3 | 83.3 | 48.7 |
| Example 15 | 131.1 | 93.9 | 93.5 | 82.4 | 51.9 |
| Example 16 | 133.6 | 94.1 | 95.2 | 86.3 | 65.3 |
| Example 17 | 130.1 | 93.6 | 94.3 | 82.7 | 58.4 |
| Example 18 | 129.9 | 93.7 | 94.1 | 83.1 | 57.8 |
| Example 19 | 127.2 | 92.3 | 92.0 | 80.9 | 50.5 |
| Example 20 | 125.8 | 92.8 | 91.7 | 81.8 | 50.6 |
| Example 21 | 123.6 | 94.2 | 92.5 | 82.1 | 51.9 |
| Example 22 | 120.4 | 93.1 | 92.2 | 80.8 | 49.7 |
| Example 23 | 122.7 | 93.5 | 92.7 | 82.6 | 55.8 |
| Example 24 | 124.7 | 93.6 | 91.2 | 80.4 | 57.9 |
| Example 25 | 128.2 | 94.0 | 93.1 | 81.2 | 59.1 |
| Example 26 | 127.7 | 93.3 | 92.6 | 79.9 | 61.0 |
| Example 27 | 125.1 | 92.9 | 91.3 | 81.4 | 58.3 |
| Example 28 | 101.5 | 91.5 | 92.4 | 80.3 | 59.7 |
| Example 29 | 90.5 | 92.8 | 93.4 | 82.1 | 60.4 |
| Example 30 | 91.3 | 94.3 | 91.6 | 73.6 | 35.3 |

As shown in Table 8, in Examples 1 to 30, a high initial discharge capacity and a high initial coulomb efficiency (initial charge-and-discharge efficiency) can be obtained, and each active material can exhibit a high energy density. Additionally, in all active materials, the 10-C/0.2-C discharge capacity ratio is 90% or more, and the output performance (rate performance) is excellent, as can be seen.

As shown in Table 2, in all of Example 1 and Comparative Examples 1 to 3, the composition of the titanium-containing composite oxide phase included in the active material was Li₂Na₂Ti₆O₁₄. As shown in Table 8, in each of the evaluation active materials obtained in Comparative Examples 1 to 3, the initial discharge capacity, the initial coulomb efficiency, and the 10-C/0.2-C discharge capacity ratio were slightly low, as compared to the evaluation active material obtained in Example 1. Additionally, in Comparative Examples 1 to 3, the capacity retention, ratio after the charge-and-discharge cycle was repeated 50 times under a high temperature condition of 45°C or 60°C was low as compared to Example 1.

In both of Example 12 and Comparative Example 4, the composition of the titanium-containing composite oxide phase included in the active material was Li₂Sr₂Ti₆O₁₄. As shown in Table 8, in the evaluation active material obtained in Comparative Example 4, the initial discharge capacity, the initial coulomb efficiency, and the 10-C/0.2-C discharge capacity ratio were slightly low, as compared to the evaluation active material obtained in Example 12. Additionally, in Comparative Example 4, the capacity retention ratio after the charge-and-discharge cycle was repeated 50 times under a high temperature condition of 45°C or 60°C was low as compared to Example 12.

In each of Examples 2 to 9 and Comparative Example 5, the composition of the titanium-containing composite oxide phase included in the active material was Li₂Na_{1.5}Ti_{5.5}Nb_{0.5}O₁₄. As shown in Table 8, in the evaluation active material obtained in Comparative Example 5, the initial discharge capacity, the initial coulomb efficiency, and the 10-C/0.2-C discharge capacity ratio were slightly low, as compared to the evaluation active materials obtained in Examples 2 to 9. Additionally, in Comparative Example 5, the capacity retention ratio after the charge-and-discharge cycle was repeated 50 times under a high temperature condition of 45°C or 60°C was low as compared to Examples 2 to 9.

In each of Examples 2 to 9, the saponification degree of PVA and the carbonization process condition used to perform the carbon coating process for the composite oxide were different, as shown in Table 6. As can be seen from the evaluation result of the carbon coating layer shown in Table 7, the carboxyl group amount changes depending on the difference in the saponification degree and the calcination temperature.

Of the results of electrochemical performance shown in Table 8, when the results of Examples 2 to 9 are compared it is apparent that an active material with excellent high-temperature cycle performance at 45°C or more can be obtained when the carboxyl group amount in the carbon coating layer is about 1%.

As can be seen from comparison between the evaluation result of the electrochemical performance in Example 1 and the evaluation result in Example 29, when a part of oxide ions are reduced, the electron conductivity improves, and excellent rate performance can be obtained. It is also found that cycle performance at a high temperature of 45°C or 60°C also improves.

In Example 30, as a result of performing after treatment on the active material of Example 1, the carbon coating was partially burned off at the time of recalcination. Hence, as shown in Table 7, the coating amount decreased, as compared to Example 1. On the other hand, in Example 30, it was confirmed that life performance under a high-temperature environment of 45°C or more was improved, as compared to Comparative Examples 1 to 3, as shown in Table 8.

### (Examples 31 to 33)

In Examples 31 to 33, nonaqueous electrolyte batteries were produced according to the following procedures.

### (Production of Negative Electrode)

Negative electrodes were produced as follows. Active material particles (carbon coated particles) obtained in Examples 10 to 12 were respectively used as negative electrode active materials for Examples 31 to 33.

First, each of the negative electrode active materials was ground so that the average particle size was 5 µm or less to obtain a ground product. Next, acetylene black, as an electro-conductive agent, was mixed in a proportion of 6 parts by mass relative to 100 parts by mass of negative electrode active material to obtain a mixture. Next, the mixture was dispersed in NMP (N-methyl-2-pyrrolidone) to obtain a dispersion. Polyvinylidene fluoride (PVdF), as a binder, was mixed with the dispersion in proportion of 10 parts by mass relative to the negative electrode active material to prepare a negative electrode slurry. A current collector, made of aluminum foil, was coated with the slurry using a blade. After the obtained product was dried at 130°C for 12 hours under vacuum, it was roll-pressed so that a density of the electrode layer (excluding the current collector) was 2.2 g/cm³ to obtain each negative electrode.

### (Production of Positive Electrode)

Positive electrodes were produced as follows. For Example 31, a commercially available spinel lithium manganese oxide (LiMn₂O₄) was used as positive electrode active material. For Example 32, an olivine iron-containing phosphate (LiFePO₄) was used as positive electrode active material. For Example 33, a lithium nickel-manganese-cobalt composite oxide (LiNi_{1/3}Mn_{1/3}Co_{1/3}O₂) was used as positive electrode active material.

First, to 100 parts by weight of positive electrode active material was mixed 5 parts by weight of acetylene black as an electro-conductive agent to obtain a mixture. Next, the mixture was dispersed in NMP to obtain a dispersion. To the dispersion was mixed PVdF, as a binder, in a proportion of 5 parts by weight relative to the positive electrode active material to prepare a positive electrode slurry. A current collector, made of aluminum foil, was coated with the slurry using a blade. After the obtained product was dried at 130°C for 12 hours under vacuum, it was roll-pressed so that a density of the electrode layer (excluding the current collector) was 2.1 g/cm³, to obtain a positive electrode.

### (Production of Electrode Group)

The positive electrode and the negative electrode produced as described above were stacked with a polyethylene separator sandwiched therebetween to obtain a stack. Next, this stack was wound and pressed to obtain a flat-shaped wound electrode group. A positive electrode terminal and a negative electrode terminal were attached to this electrode group.

### (Preparation of Nonaqueous Electrolyte)

As a mixed solvent, a mixed solvent of ethylene carbonate and diethyl carbonate (volume ratio of 1 : 1) was prepared. Lithium hexafluorophosphate (LiPF₆) was dissolved in this solvent at a concentration of 1 M. Thus, a nonaqueous electrolyte was prepared.

### (Assembly of Nonaqueous Electrolyte Battery)

Using the electrode group and the nonaqueous electrolyte produced as described above, nonaqueous electrolyte batteries of Examples 31 to 33 were fabricated.

### (Charge-and-Discharge Test)

A charge-and-discharge test was conducted at room temperature for the nonaqueous electrolyte battery of each of Examples 31 to 33. In the charge-and-discharge test, the discharge capacity for a discharge current value of 0.2 C (hourly discharge rate) within a cell voltage range of 1.8 V to 3.1 V was defined as 100%, and the capacity retention ratio in 10-C discharge was obtained. Under each of 45°C and 60°C environments, a cycle life test of 1-C charge and 1-C discharge was performed. The 1-C discharge capacity before the cycle test was defined as 100%, and the capacity retention ratio after 500 cycles was obtained. Table 9 shows the result.

**[Table 9]**

| | 10-C/0.2-C discharge capacity ratio (%) | 45°C 500 cycle capacity retention ratio (%) | 60°C 500 cycle capacity retention ratio (%) |
|---|---|---|---|
| Example 31 | 92.0 | 93.2 | 66.5 |
| Example 32 | 91.5 | 91.1 | 61.7 |
| Example 33 | 92.2 | 92.7 | 64.3 |

As shown in Table 9, all the nonaqueous electrolyte batteries exhibited a 10-C/0.2-C discharge capacity ratio of 90% or more. The capacity retention ratio obtained after the charge-and-discharge cycle was repeated 500 times under a temperature condition of 45°C was 90% or more for all the nonaqueous electrolyte batteries. The capacity retention ratio obtained after the charge-and-discharge cycle was repeated 500 times under a temperature condition of 60°C was 60% or more.

An active material according to at least one approach or example described above includes a titanium-containing composite oxide phase and a carboxyl group-containing carbon coating layer. The titanium-containing composite oxide phase includes a crystal structure belonging to a space group Cmca and/or a space group Fmmm. The carbon coating layer covers at least a part of a surface of the titanium-containing composite oxide phase. According to this active material, there can be realized a secondary battery that can exhibit high energy density and is excellent in output performance and life performance at high temperatures, a battery module and battery pack including this secondary battery, and a vehicle including this battery pack.

## Claims

1. An active material comprising:
a titanium-containing composite oxide phase comprising a crystal structure belonging to a space group Cmca, a space group Fmmm, or both the space group Cmca and the space group Fmmm, the titanium-containing composite oxide phase comprising a titanium-containing composite oxide represented by a general formula Li₂₊ₐM1_{2-b}Ti_{6-c}M2_{d}O_{14+δ},
where M1 is at least one selected from the group consisting of Sr, Ba, Ca, Mg, Na, Cs, Rb, and K,
M2 is at least one selected from the group consisting of Zr, Sn, V, Nb, Ta, Mo, W, Y, Fe, Co, Cr, Mn, Ni, and Al, and
a falls within a range of 0 ≤ a ≤ 6, b falls within a range of 0 ≤ b < 2, c falls within a range of 0 ≤ c < 6, d falls within a range of 0 ≤ d < 6, and δ falls within a range of -0.5 ≤ δ ≤ 0.5; and
a carboxyl group-containing carbon coating layer covering at least a part of the titanium-containing composite oxide phase and having a carboxyl group concentration of 0.01% to 5%, measured in accordance with the section *"Method of Measuring Carboxyl Group in Carbon Coating Layer"* of this specification.

2. The active material according to claim 1, wherein the active material comprises active material particles having a BET specific surface area equal to or greater than 1 m²/g and less than 50 m²/g.

3. The active material according to claim 2, wherein a pH of the titanium-containing composite oxide covered with the carboxyl group-containing carbon coating layer, determined by the cold extraction method of JIS K 5101-17-2:2004 in accordance with the section *"Measurement of pH and Measurement of Specific Surface Area"* of this specification, is less than 11.

4. An electrode comprising the active material according to any one of claims 1 to 3.

5. The electrode according to claim 4, wherein the electrode comprises an active material-containing layer comprising the active material.

6. The electrode according to claim 5, wherein the active material-containing layer further comprises an electro-conductive agent and a binder.

7. A secondary battery (100) comprising:
a positive electrode (5);
a negative electrode (3); and
an electrolyte,
wherein the negative electrode (3) is the electrode according to any one of claims 4 to 6.

8. The secondary battery (100) according to claim 7, wherein the positive electrode (5) comprises a positive electrode active material, and the positive electrode active material comprises an iron-containing phosphate having an olivine structure.

9. The secondary battery (100) according to claim 7, wherein the positive electrode (5) comprises a positive electrode active material, and the positive electrode active material comprises at least one selected from the group consisting of a lithium manganese composite oxide having a spinel structure and a lithium nickel manganese cobalt composite oxide.

10. A battery module (200) comprising plural of the secondary battery (100) according to any one of claims 7 to 9,
wherein the secondary batteries (100) are electrically connected in series, in parallel, or in a combination of in series and in parallel.

11. A battery pack (300) comprising the secondary battery (100) according to any one of claims 7 to 9.

12. The battery pack (300) according to claim 11, further comprising:
an external power distribution terminal (347); and
a protective circuit (344).

13. The battery pack (300) according to claims 11 or 12, comprising plural of the secondary battery (100), the secondary batteries (100) being electrically connected in series, in parallel, or in a combination of in a series and in parallel.

14. A vehicle (400) comprising the battery pack (300) according to any one of claims 11 to 13.

15. The vehicle (400) according to claim 14, which comprises a mechanism configured to convert kinetic energy of the vehicle (400) into regenerative energy.

## Patentansprüche

1. Aktivmaterial, umfassend:
eine titanhaltige Mischoxidphase, umfassend eine Kristallstruktur, die zu einer Raumgruppe Cmca, einer Raumgruppe Fmmm oder sowohl zu der Raumgruppe Cmca, als auch zu der Raumgruppe Fmmm gehört, wobei die titanhaltige Mischoxidphase ein titanhaltiges Mischoxid umfasst, das durch die allgemeine Formel Li₂₊ₐM1_{2-b}Ti_{6-c}M2_{d}O_{14+δ} dargestellt wird,
wobei M1 mindestens eines ist, ausgewählt aus der Gruppe bestehend aus Sr, Ba, Ca, Mg, Na, Cs, Rb und K,
M2 mindestens eines ist, ausgewählt aus der Gruppe bestehend aus Zr, Sn, V, Nb, Ta, Mo, W, Y, Fe, Co, Cr, Mn, Ni und Al, und
a in einen Bereich von 0 ≤ a ≤ 6 fällt, b in einen Bereich von 0 ≤ b < 2 fällt, c in einen Bereich von 0 ≤ c < 6 fällt, d in einen Bereich von 0 ≤ d < 6 fällt und δ in einen Bereich von -0,5 ≤ δ ≤ 0,5 fällt; und
eine Carboxylgruppen-haltige Kohlenstoffbeschichtungsschicht, die mindestens einen Teil der titanhaltigen Mischoxidphase bedeckt und die eine Carboxylgruppenkonzentration von 0,01% bis 5% aufweist, welche gemäß dem Abschnitt "*Verfahren zur Messung der Carboxylgruppen in der Kohlenstoffbeschichtungsschicht"* (*"Method of Measuring Carboxyl Group in Carbon Coating Layer"*) dieser Spezifikation gemessen wird.

2. Aktivmaterial gemäß Anspruch 1, wobei das Aktivmaterial Aktivmaterialpartikel mit einer spezifischen BET-Oberfläche von gleich oder größer als 1 m²/g und kleiner als 50 m²/g umfasst.

3. Aktivmaterial gemäß Anspruch 2, wobei ein pH des titanhaltigen Mischoxids, das mit der Carboxylgruppenhaltigen Kohlenstoffbeschichtungsschicht bedeckt ist, der mittels dem Kaltextraktionsverfahren nach JIS K 5101-17-2:2004 gemäß dem Abschnitt "Messung des pH und Messung der spezifischen Oberfläche" (*"Measurement of pH and Measurement of Specific Surface Area"*) dieser Spezifikation bestimmt ist, geringer als 11 ist.

4. Elektrode, umfassend das Aktivmaterial gemäß einem der Ansprüche 1 bis 3.

5. Elektrode gemäß Anspruch 4, wobei die Elektrode eine Aktivmaterial-haltige Schicht umfasst, die das Aktivmaterial umfasst.

6. Elektrode gemäß Anspruch 5, wobei die Aktivmaterial-haltige Schicht ferner ein elektrisch leitfähiges Mittel und ein Bindemittel umfasst.

7. Sekundärbatterie (100), umfassend:
eine positive Elektrode (5);
eine negative Elektrode (3); und
einen Elektrolyten,
wobei die negative Elektrode (3) eine Elektrode gemäß einem der Ansprüche 4 bis 6 ist.

8. Sekundärbatterie (100) gemäß Anspruch 7, wobei die positive Elektrode (5) ein Positivelektrodenaktivmaterial umfasst, und das Positivelektrodenaktivmaterial ein eisenhaltiges Phosphat mit Olivinstruktur umfasst.

9. Sekundärbatterie (100) gemäß Anspruch 7, wobei die positive Elektrode (5) ein Positivelektrodenaktivmaterial umfasst, und das Positivelektrodenaktivmaterial mindestens eines umfasst, ausgewählt aus der Gruppe bestehend aus einem Lithium-Mangan-Mischoxid mit Spinellstruktur und einem Lithium-Nickel-Mangan-Kobalt-Mischoxid.

10. Batteriemodul (200), umfassend mehrere der Sekundärbatterie (100) gemäß einem der Anspruche 7 bis 9,
wobei die Sekundärbatterien (100) elektrisch in Reihe, parallel oder in einer Kombination aus Reihen- und Parallelschaltung geschaltet sind.

11. Batteriepack (300) umfassend die Sekundärbatterie (100) gemäß einem der Ansprüche 7 bis 9.

12. Batteriepack (300) gemäß Anspruch 11, ferner umfassend:
einen externen Stromverteilungsanschluss (347); und
eine Schutzschaltung (344).

13. Batteriepack (300) gemäß Anspruch 11 oder 12, umfassend mehrere der Sekundärbatterie (100), wobei die Sekundärbatterien (100) elektrisch in Reihe, parallel oder in einer Kombination aus Reihen- und Parallelschaltung geschaltet sind.

14. Fahrzeug (400) umfassend das Batteriepack (300) gemäß einem der Ansprüche 11 bis 13.

15. Fahrzeug (400) gemäß Anspruch 14, welches einen Mechanismus umfasst, der konfiguriert ist eine kinetische Energie des Fahrzeugs (400) in eine rückspeisefähige Energie umzuwandeln.

## Revendications

1. Matériau actif comprenant :
une phase d'oxyde composite contenant du titane comprenant une structure cristalline appartenant à un groupe spatial Cmca, à un groupe spatial Fmmm, ou à la fois au groupe spatial Cmca et au groupe spatial Fmmm, la phase d'oxyde composite contenant du titane comprenant un oxyde composite contenant du titane représenté par une formule générale Li₂₊ₐM1_{2-b}Ti_{6-c}M2_{d}O_{14+δ},
où M1 est au moins un sélectionné dans le groupe constitué de Sr, Ba, Ca, Mg, Na, Cs, Rb et K,
M2 est au moins un sélectionné dans le groupe constitué de Zr, Sn, V, Nb, Ta, Mo, W, Y, Fe, Co, Cr, Mn, Ni et Al, et
a tombe dans une plage de 0 ≤ a ≤ 6, b tombe dans une plage de 0 ≤ b < 2, c tombe dans une plage de 0 ≤ c < 6, d tombe dans une plage de 0 ≤ d < 6, et δ tombe dans une plage de -0,5 ≤ δ ≤ 0,5 ; et
une couche de revêtement de carbone contenant un groupe carboxyle recouvrant au moins une partie de la phase d'oxyde composite contenant du titane et ayant une concentration en groupe carboxyle de 0,01 % à 5 % mesurée conformément à la section *« Procédé de Mesure de Groupe Carboxyle dans la Couche de Revêtement de Carbone »* de la présente spécification.

2. Matériau actif selon la revendication 1, dans lequel le matériau actif comprend des particules de matériau actif ayant une aire de surface spécifique BET égale ou supérieure à 1 m²/g et inférieure à 50 m²/g.

3. Matériau actif selon la revendication 2, dans lequel un pH de l'oxyde composite contenant du titane revêtu de la couche de revêtement de carbone contenant un groupe carboxyle, déterminé par le procédé d'extraction à froid de la norme JIS K 5101-17-2:2004 conformément à la section « *Mesure du pH et Mesure d'Aire de surface Spécifique »* de la présente spécification, est inférieur à 11.

4. Electrode comprenant le matériau actif selon l'une quelconque des revendications 1 à 3.

5. Electrode selon la revendication 4, dans laquelle l'électrode comprend une couche contenant un matériau actif comprenant le matériau actif.

6. Electrode selon la revendication 5, dans lequel la couche contenant le matériau actif comprend en outre un agent électroconducteur et un liant.

7. Batterie secondaire (100) comprenant :
une électrode positive (5) ;
une électrode négative (3) ; et
un électrolyte,
dans laquelle l'électrode négative (3) est l'électrode selon l'une quelconque des revendications 4 à 6.

8. Batterie secondaire (100) selon la revendication 7, dans laquelle l'électrode positive (5) comprend un matériau actif d'électrode positive, et le matériau actif d'électrode positive comprend un phosphate contenant du fer ayant une structure d'olivine.

9. Batterie secondaire (100) selon la revendication 7, dans laquelle l'électrode positive (5) comprend un matériau actif d'électrode positive et le matériau actif d'électrode positive comprend au moins un sélectionné dans le groupe constitué d'un oxyde composite de lithium et de manganèse ayant une structure en spinelle et d'un oxyde composite de lithium, de nickel, de manganèse et de cobalt.

10. Module de batterie (200) comprenant une pluralité de batteries secondaires (100) selon l'une quelconque des revendications 7 à 9,
dans lequel les batteries secondaires (100) sont connectées électriquement en série, en parallèle, ou dans une combinaison série-parallèle.

11. Bloc-batterie (300) comprenant la batterie secondaire (100) selon l'une quelconque des revendications 7 à 9.

12. Bloc-batterie (300) selon la revendication 11, comprenant en outre :
une borne de distribution d'énergie externe (347) ; et
un circuit protecteur (344).

13. Bloc-batterie (300) selon les revendications 11 ou 12, comprenant une pluralité de batteries secondaires (100), les batteries secondaires (100) étant connectées électriquement en série, en parallèle, ou dans une combinaison série-parallèle.

14. Véhicule (400) comprenant le bloc-batterie (300) selon l'une quelconque des revendications 11 à 13.

15. Véhicule (400) selon la revendication 14, qui comprend un mécanisme configuré pour convertir de l'énergie cinétique du véhicule (400) en énergie régénérative.
